# EUROPEAN PATENT APPLICATION

(11) **EP 4 801 164 A1**
(43) Date of publication of application: **02.09.2026**
(21) Application number: 23956295.2
(22) Date of filing: 23.10.2023
(51) Int. Cl.: H04W 72/23

(54) **COMMUNICATION METHOD AND APPARATUS THEREOF**

(71) Applicant: Beijing Xiaomi Mobile Software Co., Ltd., Beijing 100085 (CN)
(72) Inventor: ZHAO, Qun, Beijing 100085 (CN); DUAN, Gaoming, Beijing 100085 (CN)
(74) Representative: Stöckeler, Ferdinand
(86) International application number: PCT/CN2023/125924
(87) International publication number: WO 2025/086037

(57) **Abstract**

Disclosed in the embodiments of the present disclosure are a communication method and an apparatus thereof. The method comprises: a network device performing resource configuration on the basis of resource configuration information of a physical downlink control channel (PDCCH) in an orthogonal time frequency and space (OTFS) communication system, and sending the resource configuration information of the PDCCH to a terminal. By means of implementing the embodiments of the present disclosure, the PDCCH transmission performance of an OTFS communication system can be improved.

## Description

### FIELD

The present disclosure relates to the technical field of communication technologies, and more particularly to a communication method and a communication apparatus.

### BACKGROUND

In a communication system, communication may be performed based on an orthogonal frequency division multiplexing (OFDM) system. However, the performance of the OFDM system may deteriorate in time-varying channels. For example, in a high-speed mobile environment or high wireless frequency communication, the Doppler shift and Doppler spread of the channel in the OFDM system may be relatively large, causing interference between the subcarriers of the OFDM system. In order to address the above problems, an orthogonal time frequency and space (OTFS) communication system is proposed. The OTFS communication system is a two-dimensional modulation scheme that performs modulation in the delay-Doppler (DD) domain. Through a series of two-dimensional transformations, the dual-dispersion channel is converted into an approximately non-time-varying channel in the delay-Doppler domain, which can achieve more significant performance gains.

However, there is currently a lack of effective means for improving the transmission performance of the physical downlink control channel (PDCCH) in the OTFS communication system.

### SUMMARY

Embodiments of the present disclosure provide a communication method and a communication apparatus.

According to a first aspect of the embodiments of the present disclosure, a communication method is provided. The communication method includes: performing, by a network device, resource configuration based on resource configuration information of a physical downlink control channel (PDCCH) in an orthogonal time frequency and space (OTFS) communication system; and sending, by the network device, the resource configuration information to a terminal.

According to a second aspect of the embodiments of the present disclosure, a communication method is provided. The communication method includes: receiving, by a terminal, resource configuration information of a physical downlink control channel (PDCCH) in an orthogonal time-frequency-space (OTFS) communication system sent by the network device; forming, by the terminal, control channel elements (CCEs) based on the resource configuration information; and mapping, by the terminal, a PDCCH candidate to one or more consecutive CCEs.

According to a third aspect of the embodiments of the present disclosure, a network device is provided, including: a processing module, configured to perform resource configuration based on resource configuration information of a physical downlink control channel (PDCCH) in an orthogonal time frequency and space (OTFS) communication system; and a transceiver module, configured to send the resource configuration information to a terminal.

According to a fourth aspect of the embodiments of the present disclosure, a terminal is provided, including: a transceiver module, configured to receive resource configuration information of a physical downlink control channel (PDCCH) in an orthogonal time-frequency-space (OTFS) communication system sent by the network device; and a processing module, configured to form control channel elements (CCEs) based on the resource configuration information, where the processing module is further configured to map a PDCCH candidate to one or more consecutive CCEs.

According to a fifth aspect of the embodiments of the present disclosure, a communication system is provided, including: a network device, configured to perform optional implementations in the first aspect as described above; and a terminal, configured to perform optional implementations in the second aspect as described above.

According to a sixth aspect of the embodiments of the present disclosure, a communication device is provided, including one or more processors, where the communication device is configured to execute optional implementations in the first and second aspects as described above.

According to a seventh aspect of the embodiments of the present disclosure, a storage medium is provided. The storage medium has stored therein instructions, and the instructions, when executed on a communication device, causes the communication device to execute optional implementations in the first and second aspects as described above.

According to the technical solutions of the present disclosure, when network device performs resource configuration based on resource configuration information of the PDCCH in the OTFS communication system, a resource utilization may be improved, and thereby a transmission performance of the PDCCH in the OTFS communication system may be enhanced.

### BRIEF DESCRIPTION OF THE DRAWINGS

To describe the technical solutions in the embodiments of the present disclosure more clearly, the accompanying drawings required for describing the embodiments will be illustrated. The following drawings merely relate to some embodiments of the present disclosure, and do not specifically limit the scope of the present disclosure.
FIG. 1 is a schematic diagram of a communication system architecture according to an embodiment of the present disclosure.
FIG. 2A is an interactive schematic diagram of a communication method according to an embodiment of the present disclosure.
FIG. 2B is an interactive schematic diagram of a communication method according to an embodiment of the present disclosure.
FIG. 2C is an interactive schematic diagram of a communication method according to an embodiment of the present disclosure.
FIG. 2D is an interactive schematic diagram of a communication method according to an embodiment of the present disclosure.
FIG. 3A is a schematic diagram showing CCE resource mapping according to an embodiment of the present disclosure.
FIG. 3B is another schematic diagram showing CCE resource mapping according to an embodiment of the present disclosure.
FIG. 3C is a schematic diagram showing adjusted CCE resource mapping according to an embodiment of the present disclosure.
FIG. 3D is a schematic diagram showing transmission of a PDCCH using a guard interval according to an embodiment of the present disclosure.
FIG. 3E is a schematic diagram showing continuous CCE resource mapping according to an embodiment of the present disclosure.
FIG. 3F is a schematic diagram showing PDCCH resource mapping with CCE as a guard interval according to an embodiment of the present disclosure.
FIG. 3G is yet another schematic diagram showing CCE resource mapping according to an embodiment of the present disclosure.
FIG. 4A is a flow chart of a communication method according to an embodiment t of the present disclosure.
FIG. 4B is a flow chart of a communication method according to an embodiment of the present disclosure.
FIG. 4C is a flow chart of a communication method according to an embodiment of the present disclosure.
FIG. 4D is a flow chart of a communication method according to an embodiment of the present disclosure.
FIG. 4E is a flow chart of a communication method according to an embodiment of the present disclosure.
FIG. 4F is a flow chart of a communication method according to an embodiment of the present disclosure.
FIG. 5A is a flow chart of a communication method according to an embodiment of the present disclosure.
FIG. 6 is an interactive schematic diagram of a communication method according to an embodiment of the present disclosure.
FIG. 7A is a schematic structural diagram of a network device according to an embodiment of the present disclosure.
FIG. 7B is a schematic structural diagram of a terminal according to an embodiment of the present disclosure.
FIG. 8A is a schematic structural diagram of a communication device 8100 according to an embodiment of the present disclosure.
FIG. 8B is a schematic structural diagram of a chip 8200 according to an embodiment of the present disclosure.

### DETAILED DESCRIPTION

The embodiments of the present disclosure provide a communication method and a communication apparatus.

In a first aspect, the embodiments of the present disclosure provide a communication method. The communication method includes: performing, by a network device, resource configuration based on resource configuration information of a physical downlink control channel (PDCCH) in an orthogonal time frequency and space (OTFS) communication system; and sending, by the network device, the resource configuration information to a terminal.

In the above embodiments, when the network device performs resource configuration based on the resource configuration information of the PDCCH in the OTFS communication system, a resource utilization may be improved, and thereby a transmission performance of the PDCCH in the OTFS communication system may be enhanced.

In some embodiments of the first aspect, the resource configuration information may include a guard interval configuration of the first CORESET in the DD domain.

In the above embodiments, when the PDCCH resources are configured, the influence of the guard interval needs to be considered, which can eliminate the symbol interference caused by the two-dimensional circular convolution characteristics of the OTFS system in the DD domain, and can further improve the PDCCH transmission performance in the OTFS communication system, so that the terminal can use the guard interval to detect the PDCCH.

In some embodiments of the first aspect, the guard interval configuration of the first CORESET includes: part of resource elements (REs) in the first CORESET is used as a guard interval, and the guard interval is configured to separate the first CORESET from other channels and/or other signals.

In some embodiments of the first aspect, the guard interval configuration of the first CORESET includes: an adjacent RE outside the first CORESET is used as a guard interval, and the guard interval is configured to separate the first CORESET from other channels and/or other signals.

In some embodiments of the first aspect, the guard interval configuration of the first CORESET includes: a RE between control channel elements (CCEs) divided in the first CORESET is used as a guard interval.

In some embodiments of the first aspect, performing by the network device resource configuration on a PDCCH resource based on the resource configuration information includes: dividing, based on the guard interval configuration of the first CORESET, REs in the first CORESET into *m***n* CCEs, where *m* and *n* are each a positive integer; and numbering the *m***n* CCEs starting from a first value, and mapping each PDCCH candidate to one or more consecutive CCEs.

In some embodiments of the first aspect, dividing the REs in the first CORESET into *m***n* CCEs based on the guard interval configuration of the first CORESET includes: dividing, based on the guard interval configuration of the first CORESET, REs in the first CORESET that are available to carry CCEs into *m* CCEs in a delay dimension and into *n* CCEs in a Doppler dimension, where a guard interval exists between the *m* CCEs, and a guard interval exists between the *n* CCEs.

In the above embodiments, when the guard interval is inserted between adjacent CCEs, a relatively strong multipath of the channel may be countered, an anti-interference capability may be enhanced, and thereby a transmission performance of the PDCCH may be improved.

In some embodiments of the first aspect, the method further includes: taking one CCE among one or more consecutive CCEs to which a PDCCH candidate is mapped as a reference, and adjusting the one or more CCEs to which the PDCCH candidate is mapped to consecutive REs in the DD domain.

In the above embodiments, by adjusting CCE positions, no guard interval is inserted between the CCEs to which the PDCCH candidates are mapped, whereas a gap between two PDCCHs may be increased, which helps to mitigate an interference between PDCCHs, and thereby further enhancing the PDCCH transmission performance.

In some embodiments of the first aspect, the method further includes: configuring REs occupied by the guard interval between one or more consecutive CCEs to which a PDCCH candidate is mapped to carry information of the PDCCH candidate.

In some embodiments of the first aspect, dividing the REs in the first CORESET into *m***n* CCEs based on the guard interval configuration of the first CORESET includes: dividing, based on the guard interval configuration of the first CORESET, REs in the first CORESET that are available to carry CCEs into *m* CCEs in a delay dimension and into *n* CCEs in a Doppler dimension.

In the above embodiments, no guard interval is reserved between adjacent divided CCEs, which can increase the quantity of CCEs divided in one CORESET, thereby increasing the quantity of PDCCH candidates and further enhancing the PDCCH transmission performance.

In some embodiments of the first aspect, numbering the *m***n* CCEs starting from the first value and mapping each PDCCH candidate to the one or more consecutive CCEs includes: determining indices of L CCEs to which a k-th PDCCH candidate with an aggregation level L is mapped as kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m***n* is a total quantity of CCEs in the first CORESET; and └┘ denotes an operation of rounding down.

In some embodiments of the first aspect, numbering the *m***n* CCEs starting from the first value and mapping each PDCCH candidate to the one or more consecutive CCEs includes: determining indices of L CCEs to which a k-th PDCCH candidate with an aggregation level L is mapped as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped; *m***n* is a total quantity of CCEs in the first CORESET; c is a quantity of CCEs serving as the guard interval; and └┘ denotes an operation of rounding down.

In a second aspect, the embodiments of the present disclosure provide a communication method, including: receiving, by a terminal, resource configuration information of a physical downlink control channel (PDCCH) in an orthogonal time-frequency-space (OTFS) communication system sent by the network device; forming, by the terminal, control channel elements (CCEs) based on the resource configuration information; and mapping, by the terminal, a PDCCH candidate to one or more consecutive CCEs.

In some embodiments of the second aspect, the resource configuration information includes a guard interval configuration of a first control resource set (CORESET) in a delay-Doppler (DD) domain.

In some embodiments of the second aspect, the guard interval configuration of the first CORESET includes: part of resource elements (REs) in the first CORESET is used as a guard interval, and the guard interval is configured to separate the first CORESET from other channels and/or other signals.

In some embodiments of the second aspect, the guard interval configuration of the first CORESET includes: an adjacent RE outside the first CORESET is used as a guard interval, the guard interval is configured to separate the first CORESET from other channels and/or other signals, and REs inside the first CORESET are not used as the guard interval.

In some embodiments of the second aspect, the guard interval configuration of the first CORESET includes: a RE between CCEs divided in the first CORESET is used as a guard interval.

In some embodiments of the second aspect, forming by the terminal CCEs based on the resource configuration information includes: dividing, based on the guard interval configuration of the first CORESET, REs in the first CORESET into *m***n* CCEs; where *m* and *n* are each a positive integer.

In some embodiments of the second aspect, dividing the REs in the first CORESET into *m***n* CCEs based on the guard interval configuration of the first CORESET includes: dividing, based on the guard interval configuration of the first CORESET, REs in the first CORESET that are available to carry CCEs into *m* CCEs in a delay dimension and into *n* CCEs in a Doppler dimension, where a guard interval exists between the *m* CCEs, and a guard interval exists between the *n* CCEs.

In some embodiments of the second aspect, mapping by the terminal the PDCCH candidate to one or more consecutive CCEs includes: numbering, by the terminal, the *m***n* CCEs starting from a first value, and mapping each PDCCH candidate to one or more consecutive CCEs.

In some embodiments of the second aspect, the method further includes: taking one CCE among one or more consecutive CCEs to which a PDCCH candidate is mapped as a reference, and adjusting the one or more CCEs to which the PDCCH candidate is mapped to consecutive REs in the DD domain.

In some embodiments of the second aspect, REs occupied by the guard interval between one or more consecutive CCEs to which a PDCCH candidate is mapped carry information of the PDCCH candidate.

In some embodiments of the second aspect, dividing the REs in the first CORESET into *m***n* CCEs based on the guard interval configuration of the first CORESET includes: dividing, based on the guard interval configuration of the first CORESET, REs in the first CORESET that are available to carry CCEs into *m* CCEs in a delay dimension and into *n* CCEs in a Doppler dimension.

In some embodiments of the second aspect, mapping each PDCCH candidate to the one or more consecutive CCEs includes: determining indices of L CCEs to which a k-th PDCCH candidate with an aggregation level L is mapped as kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m***n* is a total quantity of CCEs in the first CORESET, and └┘ denotes an operation of rounding down.

In some embodiments of the second aspect, mapping each PDCCH candidate to the one or more consecutive CCE includes: determining indices of L CCEs to which a k-th PDCCH candidate with an aggregation level L is mapped as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped, *m***n* is a total quantity of CCEs in the first CORESET, c is a quantity of CCEs serving as the guard interval, and └┘ denotes an operation of rounding down.

In a third aspect, the embodiments of the present disclosure provide a network device, including: a transceiver module and a processing module. The network device is configured to perform the optional implementations in the first aspect as described above.

In a fourth aspect, the embodiments of the present disclosure provide a terminal, including a transceiver module and a processing module. The terminal is configured to perform the optional implementations in the second aspect as described above.

In a fifth aspect, the embodiments of the present disclosure provide a communication system, including: a network device, configured to perform the optional implementations in the first aspect as described above; and a terminal, configured to perform the optional implementations in the second aspect as described above.

In a sixth aspect, the embodiments of the present disclosure provide a communication device, including one or more processors. The communication device is configured to perform the optional implementations in the first aspect as described above.

In a seventh aspect, the embodiments of the present disclosure provide a communication device, including: one or more processors, where the processor is configured to invoke instructions to cause the communication device to perform the optional implementations of the second aspect as set forth above.

In an eight aspect, the embodiments of the present disclosure provide a storage medium having stored therein instructions, where the instructions, when executed on a communication device, cause the communication device to perform the optional implementations in the first and second aspects as described above.

According to a ninth aspect of the embodiments of the present disclosure, the present disclosure proposes a program product. The program product, when executed by a communication device, causes the communication device to perform the method described in the optional implementations of the first aspect or the second aspect.

According to a tenth aspect of the embodiments of the present disclosure, the present disclosure proposes a computer program. The computer program, when executed on a computer, causes the computer to perform the method described in the optional implementations of the first aspect or the second aspect.

According to an eleventh of the embodiments of the present disclosure, the present disclosure provides a chip or a chip system. The chip or chip system includes a processing circuitry configured to perform the method described in the optional implementations of the first aspect or the second aspect.

As can be appreciated, the network device, the terminal, the communication system, the storage medium, the program product, the computer program, and the chip or chip system are all used to perform the methods in the embodiments of the present disclosure. Therefore, the beneficial effects that can be achieved can refer to the beneficial effects in the corresponding methods, and thus the description thereof is omitted herein.

Embodiments of the present disclosure provide a communication method and an apparatus. In some embodiments, terms such as "information processing method" and "communication method" are interchangeable; similarly, terms such as "information processing apparatus" and "communication apparatus" are interchangeable; and terms such as "information processing system" and "communication system" are interchangeable.

The embodiments of the present disclosure are not exhaustive, but merely illustrative of some embodiments, and are not intended to specifically limit the protection scope of the present disclosure. Where there is no contradiction, each step in a certain embodiment can be implemented as an independent embodiment, and the steps can be combined arbitrarily. For example, a solution obtained by removing some steps from a certain embodiment can also be implemented as an independent embodiment, and the order of the steps in a certain embodiment can be arbitrarily exchanged. In addition, optional implementations in a certain embodiment can be combined arbitrarily. Furthermore, the embodiments can be combined arbitrarily. For example, part or all of the steps of different embodiments can be combined arbitrarily, and a certain embodiment can be arbitrarily combined with optional implementations of other embodiments.

In the various embodiments of the present disclosure, unless otherwise specified and in case of logical conflicts, the terms and/or descriptions among the embodiments are consistent and can refer to each other. Technical features in different embodiments can be combined according to their intrinsic logical relationships to form new embodiments.

The terms used in the embodiments of the present disclosure are for the purpose of describing particular embodiments only and are not intended to limit the present disclosure.

In the embodiments of the present disclosure, unless otherwise stated, elements expressed in the singular form, such as "a", "an", "the", "the above-mentioned", "the ", "the aforementioned", "this", etc., may mean "one and only one", or may also mean "one or more", "at least one", etc. For example, when translating using articles such as "a", "an", "the" in English, the noun following the article can be understood as singular or plural.

In the embodiments of the present disclosure, "a plurality of" means two or more.

In some embodiments, terms such as "at least one of", "one or more", "a plurality of", "multiple" can be used interchangeably.

In some embodiments, expressions such as "at least one of A and B", "A and/or B", "A in one case, B in another case", "in response to case A, in response to case B", etc., may, depending on the situation, include the following technical solutions: in some embodiments A (performing A independently of B); in some embodiments B (performing B independently of A); in some embodiments selecting between A and B (A and B are selectively performed); in some embodiments both A and B (both A and B are performed). When there are more branches such as A, B, C, etc., it is similar to the above.

In some embodiments, expressions such as "A or B", etc., may, depending on the situation, include the following technical solutions: in some embodiments A (performing A independently of B); in some embodiments B (performing B independently of A); in some embodiments selecting between A and B (A and B are selectively performed). When there are more branches such as A, B, C, etc., it is similar to the above.

Prefixes such as "first", "second", etc., in the embodiments of the present disclosure are only for distinguishing different objects of description, and do not impose limitations on the position, order, priority, quantity, or content of the described objects. The description of the objects refers to the description in the claims or the context of the embodiments, and should not constitute unnecessary limitations due to the use of prefixes. For example, if the described object is "field", then the ordinal numbers before "field" in "first field" and "second field" do not limit the position or order between the "fields". "First" and "second" do not limit whether the "fields" they modify are in the same message, nor the sequence of "first field" and "second field". As another example, if the described object is "level", then the ordinal numbers before "level" in "first level" and "second level" do not limit the priority between the "levels". As another example, the quantity of the described object is not limited by the ordinal numbers; it can be one or more. Taking "first device" as an example, the quantity of "device" can be one or more. In addition, objects modified by different prefixes can be the same or different. For example, if the described object is "device", then "first device" and "second device" can be the same device or different devices, and their types can be the same or different. As another example, if the described object is "information", then "first information" and "second information" can be the same information or different information, and their content can be the same or different.

In some embodiments, expressions such as "including A", "containing A", "indicating A", "carrying A" can be interpreted as directly carrying A, or indirectly indicating A.

In some embodiments, terms such as "time/frequency" and "time-frequency domain" refer to the time domain and/or the frequency domain.

In some embodiments, terms such as "in response to ...", "in response to determining ...", "in a case of ...", "when ...", "if ..." can be used interchangeably.

In some embodiments, terms such as "greater than", "greater than or equal to", "not less than", "more than", "more than or equal to", "not fewer than", "higher than", "higher than or equal to", "not lower than", "above" can be used interchangeably. Terms such as "less than", "less than or equal to", "not greater than", "fewer than", "fewer than or equal to", "not more than", "lower than", "lower than or equal to", "not higher than", "below" can be used interchangeably.

In some embodiments, an apparatus and a device can be interpreted as physical or virtual, and their names are not limited to the names recorded in the embodiments. In some cases, they can also be understood as "equipment", "device", "circuit", "network element", "node", "function", "unit", "section", "system", "network", "chip", "chip system", "entity", "subject", etc.

In some embodiments, "network" can be interpreted as an apparatus included in the network, for example, an access network device, a core network device, etc.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc., should comply with the laws and regulations of the country where it is located.

In some embodiments, data, information, etc., may be obtained after obtaining users' consent.

Furthermore, each element, each row, or each column in the tables of the embodiments of the present disclosure can be implemented as an independent embodiment. Any combination of elements, rows, or columns can also be implemented as an independent embodiment.

The corresponding relationships shown in the tables of the present disclosure may be configured or predefined. Values of information in the tables are merely examples and may be configured to other values, which are not particularly defined in the present disclosure. When configuring corresponding relationships between information and respective parameters, it is not necessarily required to configure all corresponding relationships illustrated in the tables. For example, corresponding relationships shown in some rows of the tables in the present disclosure may also not be configured. As another example, appropriate modifications and adjustments may be made based on the above tables, such as splitting, and merging. Names of parameters indicated by titles in the above tables may also adopt other names understandable by a communication device, and values or representation manners of the parameters may also adopt other values or representation manners understandable by the communication device. In implementation of the above tables, other data structures may also be used, for example, an array, a queue, a container, a stack, a linear list, a pointer, a linked list, a tree, a graph, a structure, a class, a heap, a scatter list, a hash table, or the like.

Predefined in the present disclosure may be understood as defined, pre-defined, stored, pre-stored, pre-negotiated, pre-configured, fixed, or pre-burned.

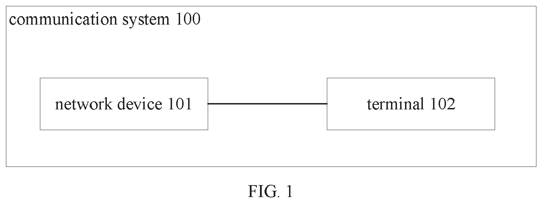

FIG. 1 is a schematic diagram of a communication system architecture according to an embodiment of the present disclosure. The communication system may include, but is not limited to, one network device and one terminal. The quantity and form of devices shown in FIG. 1 are for illustrative purposes only and do not constitute a limitation on the embodiments of the present disclosure. In practical applications, the communication system may include two or more network devices and two or more terminals. The communication system 100 shown in FIG. 1 is illustrated as including one network device 101 and one terminal 102.

In some embodiments, the terminal 102 herein may be an entity on the user side for receiving or transmitting signals, such as a mobile phone. It may also be referred to as a terminal, user equipment (UE), mobile station (MS), mobile terminal (MT), or the like. The terminal may be at least one of the following: a vehicle with communication capabilities, an intelligent vehicle, a mobile phone, a wearable device, a tablet computer (Pad), a computer with wireless transceiving function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, and so forth. The embodiments of the present disclosure impose no limitation on the specific technologies and specific device forms adopted by the terminal.

In some embodiments, the network device 101 may be an access network device. In some embodiments, the access network device is, for example, a node or device that connects a terminal device to a wireless network. The access network device may include at least one of, but is not limited to: an evolved NodeB (eNB), a next generation eNB (ng-eNB), a next generation NodeB (gNB), a NodeB (NB), a home NodeB (HNB), a home evolved NodeB (HeNB), a wireless backhaul device, a radio network controller (RNC), a base station controller (BSC), a base transceiver station (BTS), a baseband unit (BBU), a mobile switching center, a base station in a 6G communication system, an Open RAN base station, a Cloud RAN base station, a base station in other communication systems, and an access node in a Wi-Fi system.

In some embodiments, the technical solutions of the present disclosure can be applied to an Open RAN architecture. In this case, the interfaces between access network devices or within access network devices in the embodiments of the present disclosure may become internal interfaces of the Open RAN, and the processes and information interactions between these internal interfaces can be implemented through software or programs.

In some embodiments, an access network device may be composed of a central unit (CU) and a distributed unit (DU), where the CU may also be called a control unit. The CU-DU structure may split the protocol layers of the access network device, with the functions of some protocol layers placed in the CU for centralized control, and the remaining part or all of the protocol layer functions distributed in the DU, with the CU centrally controlling the DU, but not limited thereto.

As can be appreciated, the communication system described in the embodiments of the present disclosure is to illustrate the technical solutions of the embodiments of the present disclosure more clearly, and does not constitute a limitation on the technical solutions proposed in the embodiments of the present disclosure. Those of ordinary skill in the art will understand that as system architectures evolve and new service scenarios emerge, the technical solutions proposed in the embodiments of the present disclosure are equally applicable to similar technical problems.

The following embodiments of the present disclosure can be applied to the communication system 100 shown in FIG. 1, or part of the entities, but are not limited thereto. The entities shown in FIG. 1 are illustrative. The communication system may include all or part of the entities in FIG. 1, and may also include other entities not shown in FIG. 1. The quantity and form of the entities are arbitrary, and the entities may be physical or virtual. The connection relationships between the entities are illustrative. The entities may be unconnected or connected, and the connection may be in any manner, either direct or indirect, and either wired or wireless.

Various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems based on them, etc. In addition, a combination of multiple systems (e.g., a combination of LTE or LTE-A with 5G, etc.) can also be applied.

To facilitate understanding by those skilled in the art, some terms used in the embodiments of the present disclosure are explained below.

### (I) Aggregation Level

The quantity of CCEs contained in a Physical Downlink Control Channel (PDCCH) is referred to as an aggregation level of the PDCCH. For example, an access network device may choose to use 1 CCE, 2 CCEs, 4 CCEs, 8 CCEs, or 16 CCEs to carry one PDCCH. A terminal does not know the aggregation level of the PDCCH to be received, and will try all possible cases. Different aggregation levels may be applied to different DCI formats for transmission in different channel bandwidths and channel environments, thereby improving resource utilization. The ratio of DCI and PDCCH size reflects the coding efficiency. Under the premise of a certain quantity of DCI information bits, the lower the coding efficiency (code rate = symbols / code length), the more redundancy is added, the longer the code length, the better the coding robustness, and the higher the aggregation level of resources required to carry it, which is suitable for users with poor wireless channel environment. If a user has a good wireless channel environment, using a high code rate and a low aggregation level can save resources and improve resource utilization.

### (II) Search Space

The total quantity of PDCCH candidates in each search space may be determined by the aggregation levels of the search space and the quantity of PDCCH candidates for each aggregation level. Each search space is usually composed of PDCCH candidates corresponding to a given aggregation level, and may also be understood as a set of PDCCH candidates for blind detection of a DCI format of a certain type. A sum of search spaces corresponding to multiple aggregation levels is referred to as a search space set. A search space used to detect common control information may be referred to as a common search space, and a search space used to detect UE-specific control information is a UE-specific search space.

### (III) PDCCH Candidate

A PDCCH candidate may be considered as the resource location where the PDCCH may occur. Taking a UE-specific search space in an increasing order of aggregation level as an example, the CCE aggregation level is first set to 1, and one CCE is read at the starting position of the UE-specific search space. This one CCE is a PDCCH candidate. When detecting PDCCH, the UE performs rate de-matching and decoding on the read PDCCH candidate, and further performs radio network temporary identity (RNTI) descrambling and cyclic redundancy check (CRC) check. The terminal recognizes that this PDCCH is intended for itself only when the CRC check is successful, thereby further decoding the content of the DCI.

Optionally, in an Orthogonal Time Frequency and Space (OTFS) communication system, data is first mapped to a two-dimensional grid in the delay-Doppler (DD) domain, and then transformed to a two-dimensional grid in the time-frequency (TF) domain through an inverse symplectic finite Fourier transform (ISFFT). Next, symbols in the TF domain may be transmitted through a multi-carrier system (Heisenberg transform). For example, an orthogonal frequency division multiplexing (OFDM) system may be used to transmit symbols in the TF domain. Optionally, in some embodiments, in the OTFS system, a transmitting end may first map a signal to be transmitted to a two-dimensional grid in the DD domain, and then transform the signal to be transmitted to the TF domain through an inverse symplectic Fourier transform. Afterwards, the signal in the TF domain may be transmitted through a multi-carrier system. For example, an OFDM system may be used to transmit a signal in the TF domain. As an example, the signal in the TF domain is subjected to a Heisenberg transform to be converted into a time-domain signal, thereby obtaining an OTFS time-domain signal, which is then transmitted to a receiving end through a channel (e.g., a time-varying channel). Optionally, after the OTFS time-domain signal is transmitted through the time-varying channel to the receiving end, the receiving end first performs a Wigner transform on the received signal to transform it to the TF domain, and then performs a symplectic finite Fourier transform (SFFT) to restore the signal to the DD domain.

Optionally, in some embodiments, grids in the DD domain and the TF domain are collectively referred to as REs. In the OTFS communication system, after the ISFFT transformation, the data symbols on each RE in the DD domain are spread to all REs in the TF domain, that is, they are equally subjected to the frequency selectivity and time diversity of the REs in the TF domain. Therefore, all data symbols in the DD domain can be well approximated as having experienced the same non-time-varying channel. This property directly affects the reference signal design of the OTFS communication system. Under ideal conditions, the symbols received by the receiving end in the DD domain are equal to the two-dimensional circular convolution of the symbols in the DD domain at the transmitting end and the channel (such as a time-varying channel) in the DD domain. It is precisely because the OTFS communication system has the above properties that the time-varying channel may be equivalent to the non-time-varying channel in the DD domain, thereby achieving full frequency diversity and time diversity. The performance of the OTFS communication system is far superior to that of the OFDM system when the Doppler shift is relatively large. In addition, due to its two-dimensional circular convolution characteristics in the DD domain, some new requirements are also introduced into the system design, and the processing complexity is increased.

Optionally, the PDCCH is used to schedule uplink and downlink data transmission of a UE. According to the channel state of the UE, the quantity of REs to which PDCCH is mapped in DD domain is variable while meeting certain PDCCH transmission performance. Therefore, in the OTFS communication system, it may still be necessary to introduce a control channel element (CCE). The quantity of REs included in one CCE may be predefined. For example, one PDCCH candidate may include 1 CCE, 2 CCEs, 4 CCEs, 8 CCEs or 16 CCEs. The REs of one CCE may be further divided into multiple RE groups (REGs). The REs of one CORESET may be divided into multiple CCEs.

In the OTFS communication system, the symbols on each RE in the DD domain are spread to all REs in the TF domain, that is, they all experience the same channel and obtain the full frequency diversity gain and time diversity gain in the TF domain. One CCE does not need to be distributed in the DD domain. One CCE may be mapped to one or more adjacent REs in the DD domain. For example, one CCE may be mapped to *m*×*n* consecutive REs in the DD domain, where m is the quantity of samples in a delay dimension and n is the quantity of samples in a Doppler dimension. This method simplifies the CCE mapping manner and supports a more efficient resource allocation manner.

In the OTFS communication system, due to its two-dimensional circular convolution characteristics in the DD domain, any DD domain symbol at the receiving end is spread to multiple REs in the DD domain. In order to eliminate the inter-symbol interference caused by the above two-dimensional circular convolution characteristics, a guard interval may be inserted between different channels/signals. The REs in the DD domain occupied by the guard interval are not used to carry a signal, or in other words, carry a zero-valued symbol. In the OTFS communication system, how to implement the configuration of PDCCH resources to enhance PDCCH transmission performance remains an issue to be addressed.

To this end, the embodiments of the present disclosure provide a communication method and a communication apparatus, to improve the PDCCH transmission performance in the OTFS communication system.

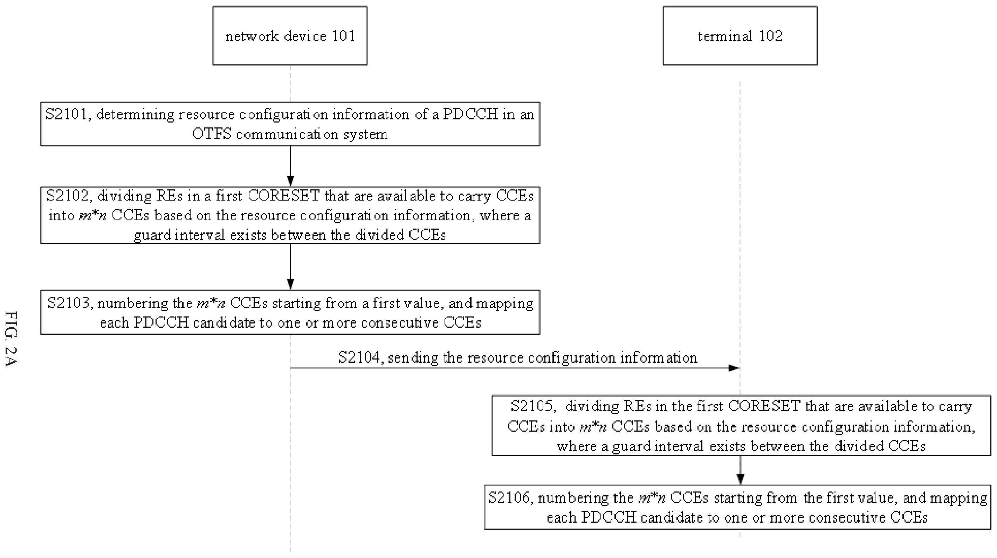

FIG. 2A is an interaction schematic diagram of a communication method according to an embodiment of the present disclosure. As shown in FIG. 2A, the communication method according to the embodiments of the present disclosure can be applied to the communication system 100, and includes but is not limited to the following steps.

In step S2101, the network device 101 determines resource configuration information of a PDCCH in an OTFS communication system.

In some embodiments, the resource configuration information may include location information of a first CORESET in a delay-Doppler (DD) domain, and may also include REs occupied by the first CORESET (or the quantity of REs occupied by the first CORESET in the DD domain). The location information of the first CORESET in the DD domain may be understood as a location of the first CORESET in the DD domain, or may be understood as which position of the DD domain is configured as the first CORESET. For example, the location of the first CORESET in the DD domain may be determined by configuring the location information of the first CORESET in the DD domain. For example, the quantity of REs included in the first CORESET may be determined by configuring the REs occupied by the first CORESET.

In some embodiments, the resource configuration information may include a guard interval configuration of the first CORESET in the DD domain. By configuring the guard interval of the first CORESET, the inter-symbol interference caused by the two-dimensional circular convolution characteristics of the OTFS communication system in the DD domain may be eliminated.

In some embodiments, the guard interval configuration of the first CORESET may be configured to divide REs in the first CORESET into *m***n* CCEs.

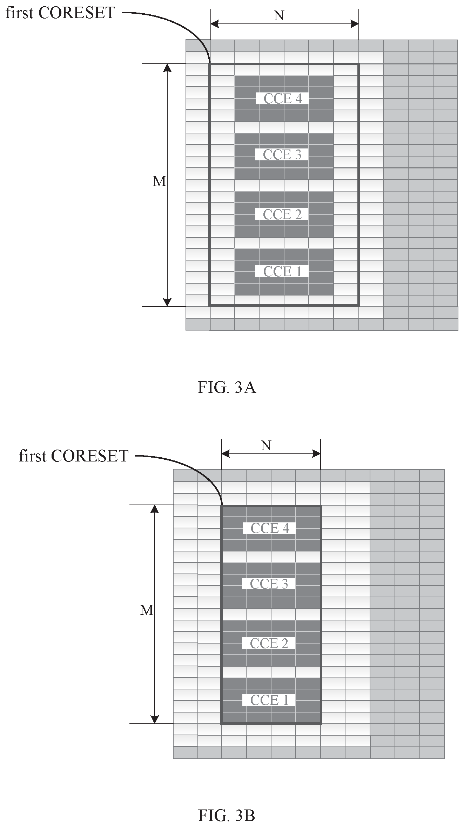

In some embodiments, the guard interval configuration of the first CORESET may include: part of REs in the first CORESET is used as a guard interval, and the guard interval is configured to separate the first CORESET from other channels and/or other signals. For example, the other channels and/or other signals may be channels and/or signals other than a channel and/or a signal carried by the first CORESET. In other words, the guard interval configuration of the first CORESET may include: a RE on an inner periphery of the first CORESET is used as a guard interval. For example, the part of the REs may be at least one RE located at a boundary of the first CORESET and extending inward in the delay dimension and the Doppler dimension. That is to say, at least one RE located at the boundary of the first CORESET and extending inward in the delay dimension and the Doppler dimension may be used as the guard interval, and the guard interval is configured to separate the first CORESET from other channels and/or other signals. For example, as shown in FIG. 3A, the first CORESET may be mapped to M×N continuous REs in the DD domain, where M is a quantity of samples in the delay dimension, and N is a quantity of samples in the Doppler dimension. The REs in one grid inward from the boundary of the first CORESET in the delay dimension and the Doppler dimension are used as the guard intervals. For example, REs in the top row, bottom row, leftmost column and rightmost column within the first CORESET in FIG. 3A are used as the guard intervals. For example, as shown in FIG. 3A, REs in the top row, bottom row, leftmost column and rightmost column within the first CORESET, together with adjacent REs outside the first CORESET, are configured to separate the first CORESET from other channels and/or other signals. Optionally, REs in the DD domain occupied by the guard interval are not used to carry a signal, or in other words, carry a symbol of zero. In FIG. 3A, each grid may represent one or more REs.

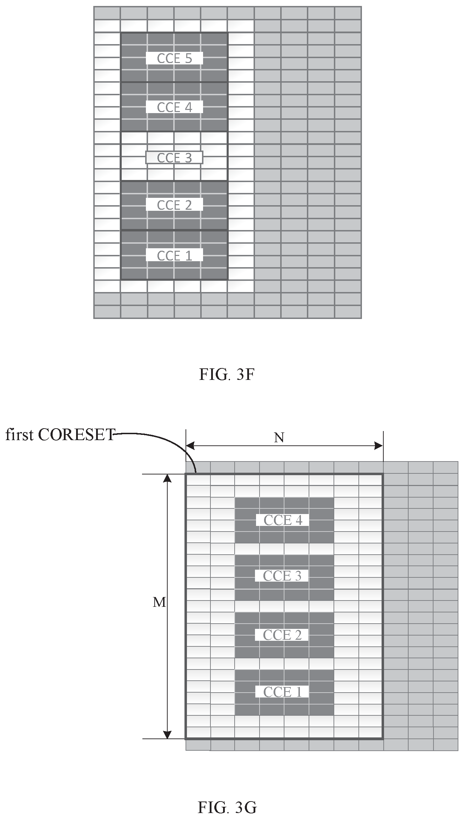

As another example, in FIG. 3G, the REs in two grids inward from the boundary of the first CORESET in the delay dimension and the Doppler dimension are used as the guard interval. For example, in FIG. 3G, the REs in the top two rows, bottom two rows, the leftmost two columns and the rightmost two columns in the first CORESET are used as the guard interval, and the guard interval is configured to separate the first CORESET from other channels and/or other signals. In FIG. 3G, each grid may represent one or more REs.

In some embodiments, the guard interval configuration of the first CORESET may include: an adjacent RE outside the first CORESET is used as a guard interval, the guard interval is configured to separate the first CORESET from other channels and/or other signals, and REs inside the first CORESET are not used as the guard interval. In other words, the guard interval configuration of the first CORESET may include: a RE on an outer periphery of the first CORESET is used as a guard interval. For example, adjacent REs outside the first CORESET may be used as the guard interval to facilitate CCE division across the entire first CORESET. For example, as shown in FIG. 3B, the first CORESET may be mapped to M×N consecutive REs in the DD domain, where M is a quantity of samples in the delay dimension and N is a quantity of samples in the Doppler dimension. In FIG. 3B, adjacent REs outside the first CORESET are used as the guard interval to separate the first CORESET from other channels and/or other signals, and REs inside the first CORESET are not used as the guard interval. Optionally, the REs in the DD domain occupied by the guard interval are not used to carry a signal, or in other words, carry a symbol of zero. In FIG. 3B, each grid may represent one or more REs.

In some embodiments, the guard interval configuration of the first CORESET may include: a RE between CCEs divided in the first CORESET is used as a guard interval. For example, the first CORESET may be mapped to M×N consecutive REs in the DD domain, where M is a quantity of samples in the delay dimension and N is a quantity of samples in the Doppler dimension. For example, as shown in FIG. 3A and FIG. 3B, REs between the CCEs divided in the first CORESET are used as the guard intervals. Optionally, the REs in the DD domain occupied by the guard interval are not used to carry a signal, or in other words, carry a symbol of zero.

In step S2102, the network device 101 divides the REs in the first CORESET that are available to carry CCEs into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs, and *m* and *n* are each a positive integer.

In some embodiments, the network device 101 may perform CCE division on REs available for carrying CCEs in the first CORESET based on the guard interval configuration of the first CORESET. That is, the network device 101 may form CCEs based on the guard interval configuration of the first CORESET, so as to determine how many CCEs may be divided (or formed) in the first CORESET.

In some embodiments, based on the guard interval configuration of the first CORESET in the resource configuration information, the network device 101 may divide REs that are available to carry CCEs in the first CORESET into *m* CCEs and the guard interval for any one of the *m* CCEs in the delay dimension, and into *n* CCEs and the guard interval for any one of the *n* CCEs in the Doppler dimension.

For example, based on the guard interval configuration of the first CORESET in the resource configuration information, the network device 101 may obtain which REs in the first CORESET are available to carry CCEs (or used for dividing CCEs), so as to facilitate CCE division. The network device 101 may divide REs that are available to carry CCEs in the first CORESET into *m* CCEs in the delay dimension and into *n* CCEs in the Doppler dimension, where a guard interval exists between the *m* CCEs and a guard interval exists between the *n* CCEs.

For example, as shown in FIG. 3A, the REs in the top row, bottom row, leftmost column and rightmost column in the first CORESET are used as the guard intervals. Therefore, CCE division may only be performed on REs located more inwardly in the first CORESET, for example, on REs of the first CORESET other than the REs used to separate the first CORESET from other channels and/or other signals. For example, as shown in FIG. 3A, CCE division may be performed on REs in the first CORESET other than the REs in the top row, bottom row, leftmost column and rightmost column.

For example, as shown in FIG. 3B, adjacent REs outside the first CORESET are used as the guard interval, which is used to separate the first CORESET from other channels and/or other signals, and REs in the first CORESET are not used as the guard interval, so CCE division may be performed on the entire first CORESET. For example, as shown in FIG. 3B, CCE division may be performed on the REs in the entire first CORESET.

Optionally, in some embodiments, *n* may be 1, and *m* may be an integer greater than 1. In the first CORESET, *m* CCEs and the guard interval for any one of the *m* CCEs may be divided in the delay dimension, and 1 CCE and the guard interval for this CCE may be divided in the Doppler dimension, so that the total quantity of CCEs divided in the first CORESET is m. For example, taking *m*= 4 as an example, as shown in FIG. 3A and FIG. 3B, in the first CORESET, 4 CCEs may be divided in the delay dimension, 1 CCE may be divided in the Doppler dimension, and any one of the 4 CCEs in the delay dimension has the guard interval, so that the total quantity of CCEs divided in the first CORESET is 4.

Optionally, in some embodiments, *m* may be 1, and *n* may be an integer greater than 1. In the first CORESET, 1 CCE and a guard interval thereof may be divided in the delay dimension, and *n* CCEs and the guard interval for any one of the *n* CCEs may be divided in the Doppler dimension. Optionally, any one of the *n* CCEs in the Doppler dimension has the guard interval, so that the total quantity of CCEs divided in the first CORESET is *n*.

Optionally, in some embodiments, *m* and *n* may be each an integer greater than 1. In the first CORESET, *m* CCEs and the guard interval for any one of the *m* CCEs may be divided in the delay dimension, and *n* CCEs and the guard interval for any one of the *n* CCEs may be divided in the Doppler dimension, so that the total quantity of CCEs divided in the first CORESET is *m***n*.

In step S2103, the network device 101 numbers the *m***n* CCEs starting from a first value, and maps each PDCCH candidate to one or more consecutive CCEs.

In some embodiments, the first value may be 0. For example, the network device 101 numbers the *m***n* CCEs starting from 0 and maps each PDCCH candidate to one or more consecutive CCEs. For example, as shown in FIG. 3A, one PDCCH candidate is mapped to consecutive CCE3 and CCE4.

In some embodiments, the resource mapping of CCEs in the first CORESET may be fixed. For example, the divided *m*n* CCEs may be numbered starting from 0, and one PDCCH candidate may be mapped to one or more consecutive CCEs. For example, indices of the L CCEs to which a k-th PDCCH candidate with an aggregation level L is mapped is kL+F, where k = $0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down. For example, as shown in FIG. 3A, it is assumed that there are two PDCCH candidates, each with an aggregation level of 2. One of the PDCCH candidates is mapped to CCE1 and CCE2, and the other PDCCH candidate is mapped to CCE3 and CCE4.

Optionally, in some embodiments, the division manner of the *m*n* CCEs may be predefined, and the network device may map the PDCCH to the CCEs according to the predefined CCE division manner. The terminal may also determine the mapping relationship between the PDCCH candidates and the CCEs according to the predefined CCE division manner.

Optionally, in some embodiments, the division manner of the *m*n* CCEs may be configured. For example, the network device configures the division manner of the *m*n* CCEs to the terminal. For example, the resource configuration information may further include the division manner of the *m*n* CCEs. The terminal determines the mapping relationship between the PDCCH candidates and the CCEs according to the division manner of the *m*n* CCEs configured by the network device.

In step S2104, the network device 101 sends the resource configuration information.

In some embodiments, the resource configuration information may include location information of the first CORESET in the DD domain, and may also include REs occupied by the first CORESET (or the quantity of REs occupied by the first CORESET in the DD domain). The location information of the first CORESET in the DD domain may be understood as a location of the first CORESET in the DD domain, or may be understood as which position of the DD domain is configured as the first CORESET. For example, the location of the first CORESET in the DD domain may be determined by configuring the location information of the first CORESET in the DD domain. For example, the quantity of REs included in the first CORESET may be determined by configuring the REs occupied by the first CORESET.

In some embodiments, the resource configuration information may include the guard interval configuration of the first CORESET in the DD domain. By configuring the guard interval of the first CORESET, the inter-symbol interference caused by the two-dimensional circular convolution characteristics of the OTFS communication system in the DD domain may be eliminated. For a description of the guard interval configuration of the first CORESET, reference may be made to the relevant description in step S2101, and thus the description thereof is omitted herein.

In some embodiments, the network device 101 may send the resource configuration information to the terminal 102, and accordingly, the terminal 102 receives the resource configuration information. For example, the terminal 102 may receive the resource configuration information sent by the network device 101. The resource configuration information may include the location information of the first CORESET in the DD domain, and the terminal may determine the location of the first CORESET in the DD domain based on the resource configuration information. The resource configuration information may further include the REs occupied by the first CORESET (or the quantity of REs occupied by the first CORESET in the DD domain), and the terminal may determine how many REs the first CORESET includes based on the resource configuration information. The resource configuration information may further include the guard interval configuration of the first CORESET in the DD domain, and the terminal may determine which REs in the first CORESET are used as the guard interval based on the resource configuration information. Optionally, the resource configuration information may include the guard interval configuration of the first CORESET in the DD domain. For relevant descriptions, reference may be made to the description of the foregoing steps, which are omitted herein for brevity.

In step S2105, the terminal 102 divides the REs in the first CORESET that are available to carry CCEs into *m* CCEs in the delay dimension and into *n* CCEs in the Doppler dimension based on the guard interval configuration of the first CORESET in the resource configuration information, where the guard interval exists between the *m* CCEs, and the guard interval exists between the *n* CCEs; in other words, the guard interval exists between *m***n* CCEs.

As can be appreciated, the manner in which the terminal 102 performs CCE division (which may also be referred to as CCE forming) on the first CORESET should be consistent with the manner in which the network device performs CCE division on the first CORESET.

In some embodiments, based on the guard interval configuration of the first CORESET in the resource configuration information, the terminal 102 divides REs that are available to carry CCEs in the first CORESET into *m***n* CCEs, so that the terminal 102 determines the mapping relationship between the PDCCH candidates and the CCEs, that is, the terminal 102 may map the PDCCH candidates to the CCEs.

In some embodiments, based on the guard interval configuration of the first CORESET in the resource configuration information, the terminal 102 divides REs that are available to carry CCEs in the first CORESET into *m* CCEs and the guard interval for any one of the *m* CCEs in the delay dimension, and into *n* CCEs and the guard interval for any one of the *n* CCEs in the Doppler dimension.

For example, based on the guard interval configuration of the first CORESET in the resource configuration information, the terminal 102 may obtain which REs in the first CORESET are available to carry CCEs (or used for dividing CCEs), so as to facilitate CCE division. The terminal 102 may divide REs that are available to carry CCEs in the first CORESET into *m* CCEs in the delay dimension and into *n* CCEs in the Doppler dimension, where the guard interval exists between the *m* CCEs and the guard interval exists between the *n* CCEs.

For example, as shown in FIG. 3A, the REs in the top row, bottom row, leftmost column and rightmost column in the first CORESET are used as the guard intervals. Therefore, CCE division may only be performed on REs located more inwardly in the first CORESET, for example, on REs of the first CORESET other than the REs used to separate the first CORESET from other channels and/or other signals. For example, as shown in FIG. 3A, CCE division may be performed on REs in the first CORESET other than the REs in the top row, bottom row, leftmost column and rightmost column.

For example, as shown in FIG. 3B, adjacent REs outside the first CORESET are used as the guard interval, which is used to separate the first CORESET from other channels and/or other signals, and REs in the first CORESET are not used as the guard interval, so CCE division may be performed on the entire first CORESET. For example, as shown in FIG. 3B, CCE division may be performed on the REs in the entire first CORESET.

Optionally, in some embodiments, *n* may be 1, and *m* may be an integer greater than 1. In the first CORESET, *m* CCEs and the guard interval for any one of the *m* CCEs may be divided in the delay dimension, and 1 CCE and the guard interval for this CCE may be divided in the Doppler dimension, so that the total quantity of CCEs divided in the first CORESET is *m*. For example, taking *m*=4 as an example, as shown in FIG. 3A and FIG. 3B, in the first CORESET, 4 CCEs may be divided in the delay dimension, and 1 CCE may be divided in the Doppler dimension, and any one of the 4 CCEs in the delay dimension has the guard interval, so that the total quantity of CCEs divided in the first CORESET is 4.

Optionally, in some embodiments, *m* may be 1, and *n* may be an integer greater than 1. In the first CORESET, 1 CCE and a guard interval thereof may be divided in the delay dimension, and *n* CCEs and the guard interval for any one of the *n* CCEs may be divided in the Doppler dimension. Optionally, any one of the *n* CCEs in the Doppler dimension has the guard interval, so that the total quantity of CCEs divided in the first CORESET is *n.*

Optionally, in some embodiments, *m* and *n* may be each an integer greater than 1. In the first CORESET, *m* CCEs and the guard interval for any one of the *m* CCEs may be divided in the delay dimension, and *n* CCEs and the guard interval for any one of the *n* CCEs may be divided in the Doppler dimension, so that the total quantity of CCEs divided in the first CORESET is *m*n.*

In step S2106, the terminal 102 numbers the *m*n* CCEs starting from the first value, and maps each PDCCH candidate to one or more consecutive CCEs.

As can be appreciated, the mapping manner between the PDCCH candidates and CCEs on the terminal 102 side is consistent with the mapping manner between the PDCCH candidates and CCEs on the network device side. For example, the mapping manner may be predefined, that is, the network device may map each PDCCH candidate to one or more consecutive CCEs based on the predefined mapping manner, and the terminal side may also map each PDCCH candidate to one or more consecutive CCEs based on the predefined mapping manner after forming CCEs based on the resource configuration information sent by the network device side. For example, the mapping manner may be configured by the network device for the terminal. After forming CCEs based on the resource configuration information sent by the network device side, the terminal may map each PDCCH candidate to one or more consecutive CCEs according to the mapping manner configured by the network device.

In some embodiments, the first value may be 0. For example, the terminal 102 numbers the *m*n* CCEs starting from 0 and maps each PDCCH candidate to one or more consecutive CCEs.

In some embodiments, in the first CORESET, the resource mapping of CCEs may be fixed. For example, the divided *m*n* CCEs may be numbered starting from 0, and one PDCCH candidate may be mapped to one or more consecutive CCEs. For example, indices of the L CCEs to which a k-th PDCCH candidate with an aggregation level L is mapped is kL+F, where k = $0 , 1 , … , \left⌊\frac{m ∗ n}{L}\right⌋ - 1$; F=0,...,L-1; L is a quantity of CCEs to which the PDCCH candidate is mapped, *m*n* is a total quantity of CCEs in the first CORESET, and └┘ denotes an operation of rounding down. For example, as shown in FIG. 3A, it is assumed that there are two PDCCH candidates, each with an aggregation level of 2. One of the PDCCH candidates is mapped to CCE1 and CCE2, and the other PDCCH candidate is mapped to CCE3 and CCE4.

Optionally, in some embodiments, the division manner of the *m***n* CCEs may be predefined, and the network device may map the PDCCH to the CCEs according to the predefined CCE division manner. The terminal may also map the PDCCH to CCEs according to the same predefined CCE division manner, thereby obtaining the mapping relationship between PDCCH candidates and CCEs.

Optionally, in some embodiments, the division manner of the *m***n* CCEs may be configured. For example, the network device configures the division manner of the *m***n* CCEs to the terminal. For example, the resource configuration information may further include the division manner of the *m***n* CCEs. The terminal maps the PDCCH to CCEs according to the division manner of the *m***n* CCEs configured by the network device, thereby obtaining the mapping relationship between PDCCH candidates and CCEs.

In some embodiments, names of information, etc., are not limited to the names recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., can be used interchangeably.

In some embodiments, terms such as "uplink", "uplink link", "physical uplink", etc., can be used interchangeably. Terms such as "downlink", "downlink", "physical downlink" can be used interchangeably. Terms such as "side", "sidelink", "side communication", "sidelink communication", "direct connection", "direct link", "direct communication", "direct link communication" can be used interchangeably.

In some embodiments, terms such as "obtain", "acquire", "get", "receive", "transmit", "bidirectional transmission", "send and/or receive" can be used interchangeably. They can be interpreted as receiving from another entity, obtaining from a protocol, obtaining from a higher layer, obtaining through its own processing, self-implementation, and other meanings.

In some embodiments, terms such as "send", "transmit", "report", "deliver", "transmit", "bidirectional transmission", "send and/or receive" can be used interchangeably.

In some embodiments, terms such as "certain", "predetermined", "preset", "set", "indicated", "some", "any", and "first" can be used interchangeably, and "specific A", " predetermined A", "preset A", "set A", "indicated A", "some A", "any A", and "first A" can be interpreted as A pre-defined in a protocol, etc., or as A obtained through setting, configuration, or indication, etc., and can also be interpreted as specific A, some A, any A, or first A, etc., but is not limited thereto.

In some embodiments, the determination or judgment can be performed by a value represented by 1 bit (0 or 1), or by a true or false value (Boolean value) represented by true or false, or by comparison of numerical values (for example, comparison with a predetermined value), but is not limited to thereto.

The method in the embodiments of the present disclosure may include at least one of step S2101 to step S2106. For example, step S2102+step S2103+step S2104 may be implemented as an independent embodiment, step S2101+step S2102+step S2103+step S2104 may be implemented as an independent embodiment, step S2105+step S2106 may be implemented as an independent embodiment, step S2102+step S2103+step S2104+step S2105+step S2106 may be implemented as an independent embodiment, and step S2101+step S2102+step S2103+step S2104+step S2105+step S2106 may be implemented as an independent embodiment, which will not be particularly defined herein.

In some embodiments, step S2101, step S2105, and step S2106 are optional, and one or more of these steps may be omitted or replaced in different embodiments.

In some embodiments, step S2105 and step S2106 are optional, and one or more of these steps may be omitted or replaced in different embodiments.

In some embodiments, step S2101, step S2102, step S2103, and step S2104 are optional, and one or more of these steps may be omitted or replaced in different embodiments.

In some embodiments, step S2101 is optional, and one or more of these steps may be omitted or replaced in different embodiments.

In some embodiments, reference may be made to other optional implementations described before or after the description corresponding to FIG. 2A.

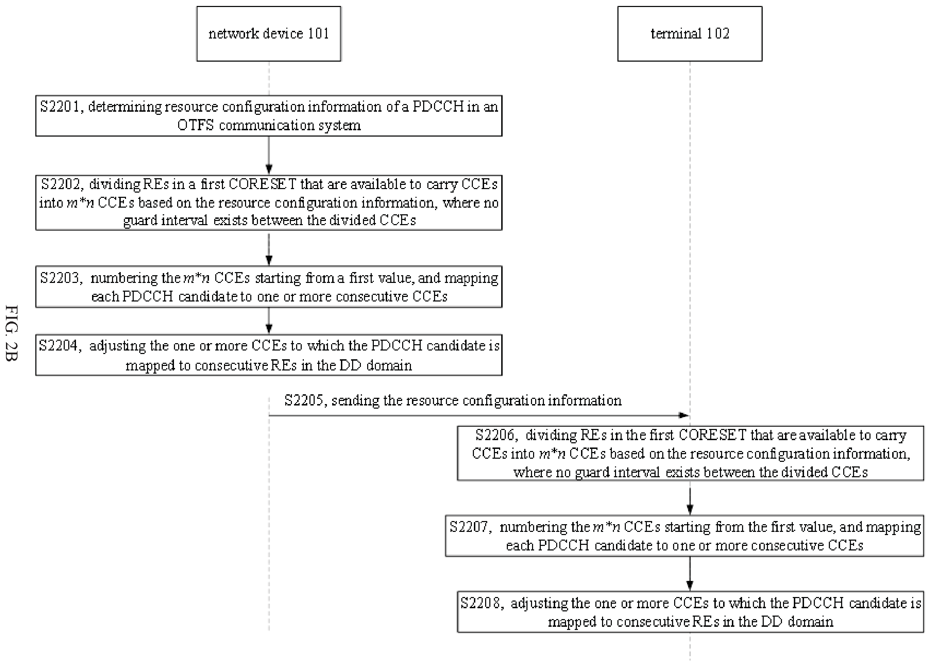

FIG. 2B is an interaction schematic diagram of the communication method according to an embodiment of the present disclosure. As shown in FIG. 2B, the communication method according to the embodiments of the present disclosure can be applied to the communication system 100, and includes but is not limited to the following steps.

In step S2201, the network device 101 determines resource configuration information of a PDCCH in an OTFS communication system.

Optional implementations of step S2201 may refer to the optional implementations of step S2101 in FIG. 2A and other related parts in the embodiments of FIG. 2A, and thus the description thereof is omitted herein.

In step S2202, the network device 101 divides the REs in the first CORESET that are available to carry CCEs into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs, and *m* and *n* are each a positive integer.

Optional implementations of step S2202 may refer to the optional implementations of step S2102 in FIG. 2A and other related parts in the embodiments of FIG. 2A, and thus the description thereof is omitted herein.

In step S2203, the network device 101 numbers the *m*n* CCEs starting from a first value, and maps each PDCCH candidate to one or more consecutive CCEs.

In some embodiments, the first value may be 0. For example, the network device 101 numbers the *m*n* CCEs starting from 0 and maps each PDCCH candidate to one or more consecutive CCEs.

Optional implementations of step S2203 may refer to the optional implementation of step S2103 in FIG. 2A and other related parts in the embodiments of FIG. 2A, and thus the description thereof is omitted herein.

In step S2204, the network device 101 takes one CCE among one or more consecutive CCEs to which a PDCCH candidate is mapped as a reference, and adjusts the one or more CCEs to which the PDCCH candidate is mapped to consecutive REs in the DD domain.

In some embodiments, the resource mapping of CCEs in the first CORESET is adjusted with the aggregation level of the PDCCH candidate. For example, the divided *m*n* CCEs may be numbered starting from 0, and one PDCCH candidate may be mapped to one or more consecutive CCEs. For example, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down. Next, one CCE among one or more consecutive CCEs to which a PDCCH candidate is mapped is taken as a reference, and the one or more CCEs to which the PDCCH candidate is mapped is adjusted to consecutive REs in the DD domain. For example, for a k-th PDCCH candidate with an aggregation level L, taking one CCE with the smallest index (such as index kL) to which the k-th PDCCH candidate with the aggregation level L is mapped as a reference, L CCEs to which the k-th PDCCH candidate with the aggregation level L is mapped are adjusted to continuous REs in the DD domain, while the total number of occupied REs is still the total number of REs of L CCEs.

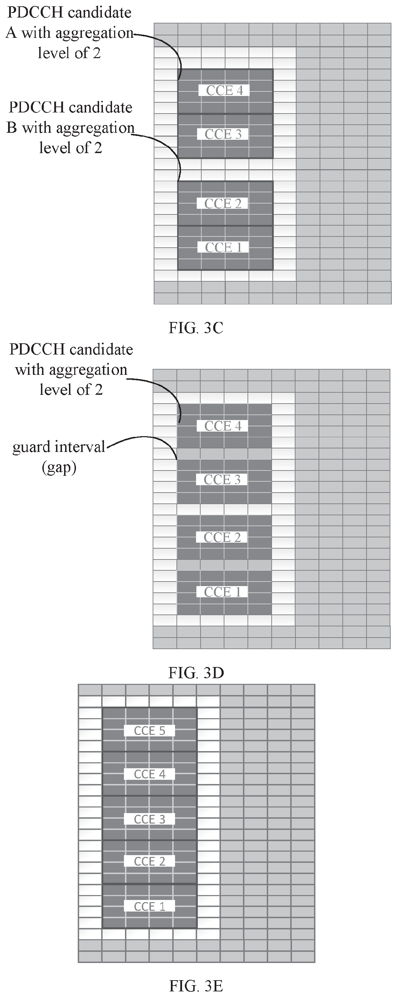

For example, it is assumed that there are two PDCCH candidates, e.g., PDCCH candidate A and PDCCH candidate B, each with an aggregation level of 2. Continuous CCEs to which PDCCH candidate B is mapped are CCE1 and CCE2, and continuous CCEs to which PDCCH candidate A is mapped are CCE3 and CCE4. There is a guard interval between CCE1 and CCE2, and there is a guard interval between CCE3 and CCE4. As shown in FIG. 3C, using CCE2 as a reference for PDCCH candidate B (i.e., a mapping position of CCE2 remains unchanged), the other CCEs (such as CCE1) of PDCCH candidate B are mapped to the upper REs, so that there is no guard interval between CCE1 and CCE2, meaning the REs to which CCE1 and CCE2 are mapped are continuous. As shown in FIG. 3C, using CCE4 as a reference for PDCCH candidate A (i.e., a mapping position of CCE4 remains unchanged), the other CCEs (such as CCE3) of PDCCH candidate A are mapped to the upper REs, so that there is no guard interval between CCE3 and CCE4, meaning the REs to which CCE3 and CCE4 are mapped are continuous. Therefore, by adjusting the CCE position, the interval between the two PDCCHs is increased to 2 samples, so as to reduce the interference between PDCCHs.

In step S2205, the network device 101 sends the resource configuration information.

Optional implementations of step S2205 may refer to the optional implementations of step S2104 in FIG. 2A and other related parts in the embodiments of FIG. 2A, and thus the description thereof is omitted herein.

In step S2206, the terminal 102 divides the REs in the first CORESET that are available to carry CCEs into *m* CCEs in the delay dimension and into *n* CCEs in the Doppler dimension based on the guard interval configuration of the first CORESET in the resource configuration information, where the guard interval exists between the *m* CCEs, and the guard interval exists between the *n* CCEs.

As can be appreciated, the manner in which the terminal 102 performs CCE division on the first CORESET should be consistent with the manner in which the network device performs CCE division on the first CORESET.

The optional implementation of step S2206 may refer to the optional implementation of step S2105 in FIG. 2A and other related parts in the embodiments of FIG. 2A, and thus the description thereof is omitted herein.

In step S2207, the terminal 102 numbers *m*n* CCEs starting from the first value, and maps each PDCCH candidate to one or more consecutive CCEs.

As can be appreciated, the mapping manner between the PDCCH candidates and CCEs on the terminal 102 side is consistent with the mapping manner between the PDCCH candidates and CCEs on the network device side.

The optional implementation of step S2207 may refer to the optional implementation of step S2106 in FIG. 2A and other related parts in the embodiments of FIG. 2A, and thus the description thereof is omitted herein.

In step S2208, the terminal 102 takes one CCE among one or more consecutive CCEs to which a PDCCH candidate is mapped as a reference, and adjusts the one or more CCEs to which the PDCCH candidate is mapped to consecutive REs in the DD domain, thereby obtaining a mapping relationship between the PDCCH candidates and the CCEs.

In some embodiments, the resource mapping of CCEs in the first CORESET is adjusted with the aggregation level of the PDCCH candidate. For example, the divided *m*n* CCEs may be numbered starting from 0, and one PDCCH candidate may be mapped to one or more consecutive CCEs. For example, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down. Next, one CCE among one or more consecutive CCEs to which a PDCCH candidate is mapped is taken as a reference, and the one or more CCEs to which the PDCCH candidate is mapped is adjusted to consecutive REs in the DD domain. For example, for a k-th PDCCH candidate with an aggregation level L, taking one CCE with the smallest index (such as index kL) to which the k-th PDCCH candidate with the aggregation level L is mapped as a reference, L CCEs to which the k-th PDCCH candidate with the aggregation level L is mapped are adjusted to continuous REs in the DD domain, while the total number of occupied REs is still the total number of REs of L CCEs.

For example, it is assumed that there are two PDCCH candidates, e.g., PDCCH candidate A and PDCCH candidate B, each with an aggregation level of 2. Continuous CCEs to which PDCCH candidate B is mapped are CCE1 and CCE2, and continuous CCEs to which PDCCH candidate A is mapped are CCE3 and CCE4. There is a guard interval between CCE1 and CCE2, and there is a guard interval between CCE3 and CCE4. As shown in FIG. 3C, using CCE2 as a reference for PDCCH candidate B (i.e., a mapping position of CCE2 remains unchanged), the other CCEs (such as CCE1) of PDCCH candidate B are mapped to the upper REs, so that there is no guard interval between CCE1 and CCE2, meaning the REs to which CCE1 and CCE2 are mapped are continuous. As shown in FIG. 3C, using CCE4 as a reference for PDCCH candidate A (i.e., a mapping position of CCE4 remains unchanged), the other CCEs (such as CCE3) of PDCCH candidate A are mapped to the upper REs, so that there is no guard interval between CCE3 and CCE4, meaning the REs to which CCE3 and CCE4 are mapped are continuous. Therefore, by adjusting the CCE position, the interval between the two PDCCHs is increased to 2 samples, so as to reduce the interference between PDCCHs.

The method in the embodiments of the present disclosure may include at least one of step S2201 to step S2208. For example, step S2202+step S2203+step S2204+step S2205 may be implemented as an independent embodiment, step S2201+step S2202+step S2203+step S2204+step S2205 may be implemented as an independent embodiment, step S2206+step S2207+step S2208 may be implemented as an independent embodiment, step S2202+step S2203+step S2204+step S2205+step S2206+step S2207+step S2208 may be implemented as an independent embodiment, and step S2201+step S2202+step S2203+step S2204+step S2205+step S2206+step S2207+step S2208 may be implemented as an independent embodiment, which will not be particularly defined herein.

In some embodiments, step S2201, step S2206, step S2207 and step S2208 are optional, and one or more of these steps may be omitted or replaced in different embodiments.

In some embodiments, step S2206, step S2207 and step S2208 are optional, and one or more of these steps may be omitted or replaced in different embodiments.

In some embodiments, step S2201, step S2202, step S2203, step S2204 and step S2205 are optional, and one or more of these steps may be omitted or replaced in different embodiments.

In some embodiments, step S2201 is optional, and one or more of these steps may be omitted or replaced in different embodiments.

In some embodiments, reference may be made to other optional implementations described before or after the description corresponding to FIG. 2B.

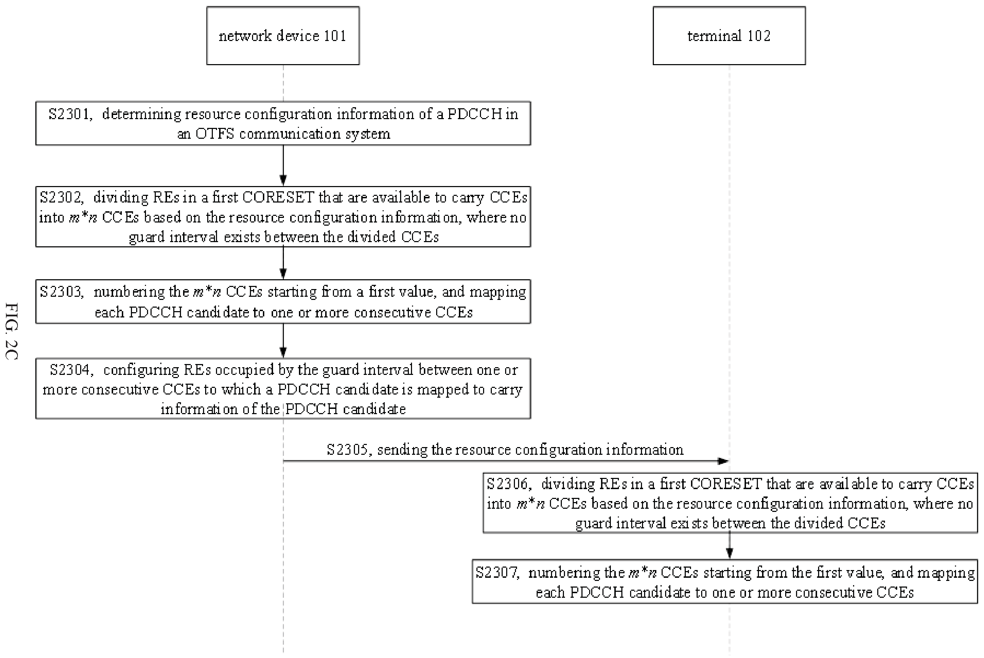

FIG. 2C is an interaction schematic diagram of a communication method according to an embodiment of the present disclosure. As shown in FIG. 2C, the communication method according to the embodiments of the present disclosure can be applied to the communication system 100, and includes but is not limited to the following steps.

In step S2301, the network device 101 determines resource configuration information of a PDCCH in an OTFS communication system.

The optional implementation of step S2301 may refer to the optional implementation of step S2101 in FIG. 2A and other related parts in the embodiments of FIG. 2A, and thus the description thereof is omitted herein.

In step S2302, the network device 101 divides the REs in the first CORESET that are available to carry CCEs into *m* CCEs in the delay dimension and into *n* CCEs in the Doppler dimension based on the guard interval configuration of the first CORESET in the resource configuration information, where a guard interval exists between the *m* CCEs, and a guard interval exists between the *n* CCEs; in other words, the guard interval exists between *m*n* CCEs; *m* and *n* are each a positive integer.

Optional implementations of step S2302 may refer to the optional implementation of step S2102 in FIG. 2A and other related parts in the embodiments of FIG. 2A, and thus the description thereof is omitted herein.

In step S2303, the network device 101 numbers the *m*n* CCEs starting from a first value, and maps each PDCCH candidate to one or more consecutive CCEs.

The optional implementation of step S2303 may refer to the optional implementation of step S2103 in FIG. 2A and other related parts in the embodiments of FIG. 2A, and thus the description thereof is omitted herein.

In step S2304, the network device 101 configures REs occupied by the guard interval between one or more consecutive CCEs to which a PDCCH candidate is mapped to carry information of the PDCCH candidate.

In some embodiments, the resource mapping of CCEs in the first CORESET may be fixed. For example, the divided *m*n* CCEs may be numbered starting from 0, and one PDCCH candidate may be mapped to one or more consecutive CCEs. For example, indices of the L CCEs to which a k-th PDCCH candidate with an aggregation level L is mapped is kL+F, where $k = 0 , 1 , … , \left⌊\frac{m ∗ n}{L}\right⌋ - 1$ ; F=0,...,L-1; L is a quantity of CCEs to which the k-th PDCCH candidate is mapped; *m*n* is a total quantity of CCEs in the first CORESET; and └┘ denotes an operation of rounding down. For a PDCCH candidate with an aggregation level L, the REs of the guard interval between the L CCEs to which this PDCCH candidate is mapped may be used to carry the information of this PDCCH.

For example, as shown in FIG. 3D, it is assumed that there are two PDCCH candidates, each with an aggregation level of 2. The guard interval between the 2 CCEs of one PDCCH candidate is also used to send the information of this PDCCH. The REs used as the guard interval may adopt the precoder of one of the 2 CCEs adjacent to the REs. For example, as shown in FIG. 3D, the REs of the guard interval (gap) may adopt the precoder of CCE3 or CCE4 adjacent to the REs.

In step S2305, the network device 101 sends the resource configuration information.

The optional implementation of step S2305 may refer to the optional implementation of step S2104 in FIG. 2A and other related parts in the embodiments of FIG. 2A, and thus the description thereof is omitted herein.

In step S2306, the terminal 102 divides the REs in the first CORESET that are available to carry CCEs into *m* CCEs in the delay dimension and into *n* CCEs in the Doppler dimension based on the guard interval configuration of the first CORESET in the resource configuration information, where the guard interval exists between the *m* CCEs, and the guard interval exists between the *n* CCEs.

As can be appreciated, the manner in which the terminal 102 performs CCE division on the first CORESET should be consistent with the manner in which the network device performs CCE division on the first CORESET.

Optional implementations of step S2306 may refer to the optional implementations of step S2105 in FIG. 2A and other related parts in the embodiments of FIG. 2A, and thus the description thereof is omitted herein.

In step S2307, the terminal 102 numbers the *m*n* CCEs starting from the first value, and maps each PDCCH candidate to one or more consecutive CCEs.

As can be appreciated, the mapping manner between the PDCCH candidates and CCEs on the terminal 102 side is consistent with the mapping manner between the PDCCH candidates and CCEs on the network device side.

In some embodiments, the resource mapping of CCEs in the first CORESET may be fixed. For example, the divided *m*n* CCEs may be numbered starting from 0, and one PDCCH candidate may be mapped to one or more consecutive CCEs, thereby obtaining the mapping relationship between PDCCH candidates and CCEs. For example, indices of the L CCEs to which a k-th PDCCH candidate with an aggregation level L is mapped is kL+F, where $k = 0 , 1 , … , \left⌊\frac{m ∗ n}{L}\right⌋ - 1$ ; F=0,...,L-1; L is a quantity of CCEs to which the k-th PDCCH candidate is mapped; *m*n* is a total quantity of CCEs in the first CORESET; and └┘ denotes an operation of rounding down. For a PDCCH candidate with an aggregation level L, the REs of the guard interval between the L CCEs to which this PDCCH candidate is mapped may be used to carry the information of this PDCCH.

Optional implementations of step S2307 may refer to the optional implementations of step S2106 in FIG. 2A and other related parts in the embodiments of FIG. 2A, and thus the description thereof is omitted herein.

In some embodiments, the REs occupied by the guard interval between one or more consecutive CCEs to which the PDCCH candidate is mapped may carry the information of the PDCCH candidate. For example, as shown in FIG. 3D, it is assumed that there are two PDCCH candidates, each with an aggregation level of 2. The guard interval between the 2 CCEs of one PDCCH candidate is also used to send the information of this PDCCH. The REs used as the guard interval may adopt the precoder of one of the 2 CCEs adjacent to the REs. For example, as shown in FIG. 3D, the REs of the guard interval (gap) may adopt the precoder of CCE3 or CCE4 adjacent to the REs.

The method in the embodiments of the present disclosure may include at least one of step S2301 to step S2307. For example, step S2302+step S2303+step S2304+step S2305 may be implemented as an independent embodiment, step S2301+step S2302+step S2303+step S2304+step S2305 may be implemented as an independent embodiment, step S2306+step S2307 may be implemented as an independent embodiment, step S2302+step S2303+step S2304+step S2305+step S2306+step S2307 may be implemented as an independent embodiment, and step S2301+step S2302+step S2303+step S2304+step S2305+step S2306+step S2307 may be implemented as an independent embodiment, which will not be particularly defined herein.

In some embodiments, step S2301, step S2306 and step S2307 are optional, and one or more of these steps may be omitted or replaced in different embodiments.

In some embodiments, step S2306 and step S2307 are optional, and one or more of these steps may be omitted or replaced in different embodiments.

In some embodiments, step S2301, step S2302, step S2303, step S2304 and step S2305 are optional, and one or more of these steps may be omitted or replaced in different embodiments.

In some embodiments, step S2301 is optional, and one or more of these steps may be omitted or replaced in different embodiments.

In some embodiments, reference may be made to other optional implementations described before or after the description corresponding to FIG. 2C.

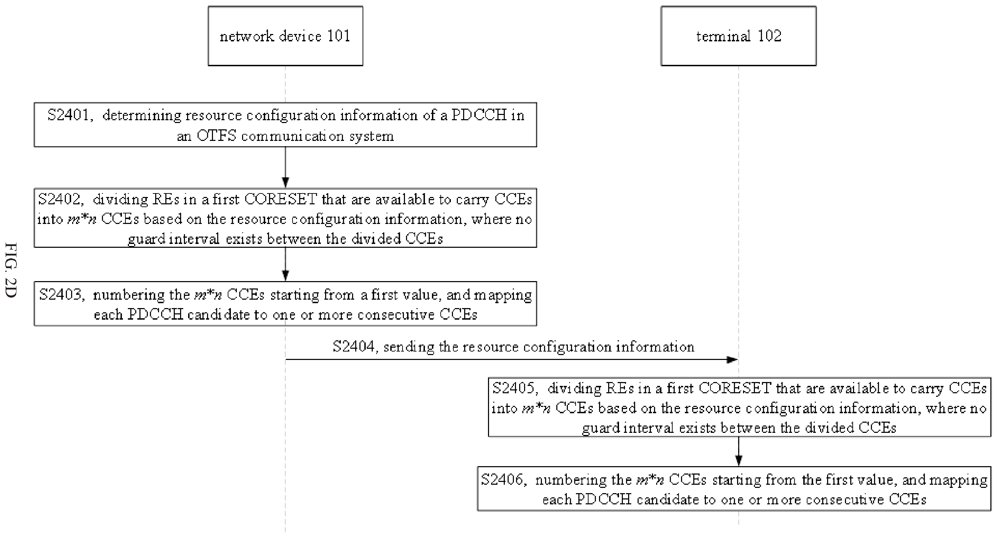

FIG. 2D is an interaction schematic diagram of the communication method according to an embodiment of the present disclosure. As shown in FIG. 2D, the communication method according to the embodiments of the present disclosure can be applied to the communication system 100, and includes but is not limited to the following steps.

In step S2401, the network device 101 determines resource configuration information of a PDCCH in an OTFS communication system.

The optional implementation of step S2401 may refer to the optional implementation of step S2101 in FIG. 2A and other related parts in the embodiments of FIG. 2A, and thus the description thereof is omitted herein.

In step S2402, the network device 101 divides the REs in the first CORESET that are available to carry CCEs into *m* CCEs in the delay dimension and into *n* CCEs in the Doppler dimension based on the guard interval configuration of the first CORESET in the resource configuration information, where *m* and *n* are each a positive integer.

In some embodiments, there is no guard interval between *m***n* CCEs divided in the first CORESET.

Optionally, one control channel resource set (CORESET) may be mapped to M×N continuous REs in the DD domain. The REs of the CORESET may be divided into multiple CCEs, and no guard interval is reserved between adjacent CCEs. With this method, the quantity of CCEs divided in the CORESET increases.

Optionally, in some embodiments, *n* may be 1, and *m* may be an integer greater than 1. In the first CORESET, *m* CCEs may be divided in the delay dimension, and 1 CCE may be divided in the Doppler dimension, so that the total quantity of CCEs divided in the first CORESET is *m*. For example, taking *m*=5 as an example, as shown in FIG. 3E, in the first CORESET, 5 CCEs may be divided in the delay dimension, and 1 CCE may be divided in the Doppler dimension, so that the total quantity of CCEs divided in the first CORESET is 4.

Optionally, in some embodiments, *m* may be 1, and *n* may be an integer greater than 1. In the first CORESET, 1 CCE may be divided in the delay dimension, and *n* CCEs and guard interval may be divided in the Doppler dimension, so that the total quantity of CCEs divided in the first CORESET is *n*.

Optionally, in some embodiments, *m* and *n* may be each an integer greater than 1. In the first CORESET, *m* CCEs may be divided in the delay dimension, and *n* CCEs may be divided in the Doppler dimension, so that the total quantity of CCEs divided in the first CORESET is *m*n.*

In step S2403, the network device 101 numbers *m*n* CCEs starting from a first value, and maps each PDCCH candidate to one or more consecutive CCEs.

In some embodiments, the first value may be 0. For example, the network device 101 numbers the *m*n* CCEs starting from 0 and maps each PDCCH candidate to one or more consecutive CCEs.

In some embodiments, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down.

In some embodiments, indices of L CCEs to which a k-th PDCCH candidate with an aggregation level L is mapped are determined as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down. For example, as shown in FIG. 3F, one CCE (such as CCE3 in FIG. 3E) is used as a guard interval between two PDCCH candidates with the same aggregation level.

In step S2404, the network device 101 sends the resource configuration information.

The optional implementation of step S2404 may refer to the optional implementation of step S2104 in FIG. 2A and other related parts in the embodiments of FIG. 2A, and thus the description thereof is omitted herein.

In step S2405, the terminal 102 divides the REs in the first CORESET that are available to carry CCEs into *m* CCEs in the delay dimension and into *n* CCEs in the Doppler dimension based on the guard interval configuration of the first CORESET in the resource configuration information, where *m* and *n* are each a positive integer.

In some embodiments, there is no guard interval between *m*n* CCEs divided in the first CORESET.

As can be appreciated, the manner in which the terminal 102 performs CCE division (which may also be referred to as CCE forming) on the first CORESET should be consistent with the manner in which the network device performs CCE division on the first CORESET.

Optionally, one control channel resource set (CORESET) may be mapped to M×N continuous REs in the DD domain. The REs of the CORESET may be divided into multiple CCEs, and no guard interval is reserved between adjacent CCEs. With this method, the quantity of CCEs divided in the CORESET increases.

Optionally, in some embodiments, *n* may be 1, and *m* may be an integer greater than 1. In the first CORESET, *m* CCEs may be divided in the delay dimension, and 1 CCE may be divided in the Doppler dimension, so that the total quantity of CCEs divided in the first CORESET is *m.* For example, taking *m*=5 as an example, as shown in FIG. 3E, in the first CORESET, 5 CCEs may be divided in the delay dimension, and 1 CCE may be divided in the Doppler dimension, so that the total quantity of CCEs divided in the first CORESET is 4.

Optionally, in some embodiments, *m* may be 1, and *n* may be an integer greater than 1. In the first CORESET, 1 CCE may be divided in the delay dimension, and *n* CCEs and guard interval may be divided in the Doppler dimension, so that the total quantity of CCEs divided in the first CORESET is *n.*

Optionally, in some embodiments, *m* and *n* may be each an integer greater than 1. In the first CORESET, *m* CCEs may be divided in the delay dimension, and *n* CCEs may be divided in the Doppler dimension, so that the total quantity of CCEs divided in the first CORESET is *m*n.*

In step S2406, the terminal 102 numbers *m*n* CCEs starting from the first value, and maps each PDCCH candidate to one or more consecutive CCEs.

As can be appreciated, the mapping manner between the PDCCH candidates and CCEs on the terminal 102 side is consistent with the mapping manner between the PDCCH candidates and CCEs on the network device side.

In some embodiments, the first value may be 0. For example, the terminal 102 numbers the *m*n* CCEs starting from 0 and maps each PDCCH candidate to one or more consecutive CCEs, thereby obtaining a mapping relationship between the PDCCH candidates and the CCEs.

In some embodiments, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down.

In some embodiments, indices of L CCEs to which a k-th PDCCH candidate with an aggregation level L is mapped are determined as k(L+c)+F, where $k = 0 , 1 , … , \left⌊\frac{m ∗ n + c}{L + c}\right⌋ - 1$;

F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down. For example, as shown in FIG. 3F, one CCE (such as CCE3 in FIG. 3E) is used as a guard interval between two PDCCH candidates with the same aggregation level.

The method in the embodiments of the present disclosure may include at least one of step S2401 to step S2406. For example, step S2402+step S2403+step S2404 may be implemented as an independent embodiment, step S2401+step S2402+step S2403+step S2404 may be implemented as an independent embodiment, step S2405+step S2406 may be implemented as an independent embodiment, step S2402+step S2403+step S2404+step S2405+step S2406 may be implemented as an independent embodiment, and step S2401+step S2402+step S2403+step S2404+step S2405+step S2406 may be implemented as an independent embodiment, which will not be particularly defined herein.

In some embodiments, step S2401, step S2405, and step S2406 are optional, and one or more of these steps may be omitted or replaced in different embodiments.

In some embodiments, step S2405 and step S2406 are optional, and one or more of these steps may be omitted or replaced in different embodiments.

In some embodiments, step S2401, step S2402, step S2403 and step S2404 are optional, and one or more of these steps may be omitted or replaced in different embodiments.

In some embodiments, step S2401 is optional, and one or more of these steps may be omitted or replaced in different embodiments.

In some embodiments, reference may be made to other optional implementations described before or after the description corresponding to FIG. 2D.

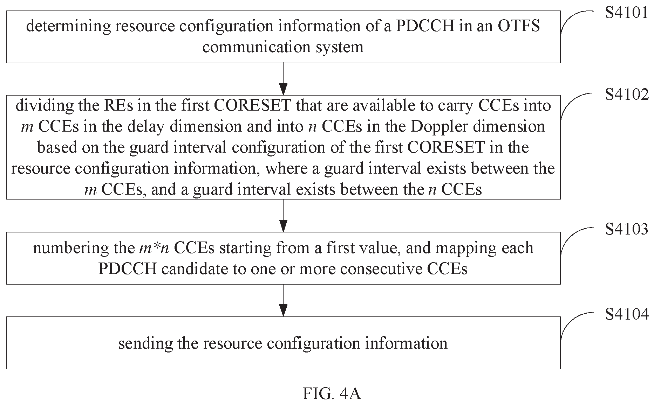

FIG. 4A is a flowchart of a communication method according to embodiments of the present disclosure. As shown in FIG. 4A, embodiments of the present disclosure relate to a communication method, which may be executed by the network device 101, and the communication method may include but is not limited to the following steps.

Step S4101, resource configuration information of a PDCCH in an OTFS communication system is determined.

In some embodiments, the resource configuration information may include a guard interval configuration of a first CORESET in a DD domain.

Optional implementations of step S4101 may refer to the optional implementations of step S2101 in FIG. 2A and other related parts in the embodiments of FIG. 2A, and thus the description thereof is omitted herein.

Step S4102, REs in the first CORESET that are available to carry CCEs are divided into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs, and *m* and *n* are each a positive integer.

Optional implementations of step S4102 may refer to the optional implementations of step S2102 in FIG. 2A and other related parts in the embodiments of FIG. 2A, and thus the description thereof is omitted herein.

Step S4103, the *m*n* CCEs are numbered starting from a first value, and each PDCCH candidate is mapped to one or more consecutive CCEs.

Optional implementations of step S4103 may refer to the optional implementation of step S2103 in FIG. 2A and other related parts in the embodiments of FIG. 2A, and thus the description thereof is omitted herein.

Step S4104, the resource configuration information is sent.

Optional implementations of step S4104 may refer to the optional implementations of step S2104 in FIG. 2A and other related parts in the embodiments of FIG. 2A, and thus the description thereof is omitted herein.

The method in the embodiments of the present disclosure may include at least one of step S4101 to step S4104. For example, step S4102+step S4103+step S4104 may be implemented as an independent embodiment, step S4101+step S4102+step S4103+step S4104 may be implemented as an independent embodiment, which will not be particularly defined herein.

In some embodiments, step S4101 is optional, and one or more of these steps may be omitted or replaced in different embodiments.

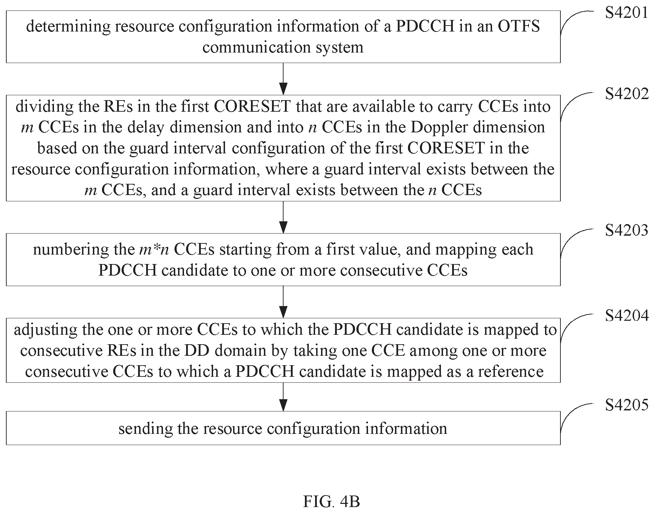

FIG. 4B is a flowchart of a communication method according to an embodiment of the present disclosure. As shown in FIG. 4B, embodiments of the present disclosure relate to a communication method, which may be executed by the network device 101, and the communication method may include but is not limited to the following steps.

Step S4201, resource configuration information of a PDCCH in an OTFS communication system is determined.

In some embodiments, the resource configuration information may include a guard interval configuration of a first CORESET in a DD domain.

Optional implementations of step S4201 may refer to the optional implementations of step S2101 in FIG. 2A and other related parts in the embodiments of FIG. 2A, and thus the description thereof is omitted herein.

Step S4202, REs in the first CORESET that are available to carry CCEs are divided into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs, and *m* and *n* are each a positive integer.

Optional implementations of step S4202 may refer to the optional implementations of step S2102 in FIG. 2A and other related parts in the embodiments of FIG. 2A, and thus the description thereof is omitted herein.

Step S4203, the *m*n* CCEs are numbered starting from a first value, and each PDCCH candidate is mapped to one or more consecutive CCEs.

Optional implementations of step S4203 may refer to the optional implementation of step S2203 in FIG. 2B and other related parts in the embodiments of FIG. 2B, and thus the description thereof is omitted herein.

Step S4204, taking one CCE among one or more consecutive CCEs to which a PDCCH candidate is mapped as a reference, the one or more CCEs to which the PDCCH candidate is mapped to are adjusted to consecutive REs in the DD domain.

Optional implementations of step S4204 may refer to the optional implementations of step S2204 in FIG. 2B and other related parts in the embodiments of FIG. 2B, and thus the description thereof is omitted herein.

Step S4205, the resource configuration information is sent.

Optional implementations of step S4205 may refer to the optional implementations of step S2104 in FIG. 2A and other related parts in the embodiments of FIG. 2A, and thus the description thereof is omitted herein.

The method in the embodiments of the present disclosure may include at least one of step S4201 to step S4204. For example, step S4202+step S4203+step S4204+step S4205 may be implemented as an independent embodiment, step S4201+step S4202+step S4203+step S4204+step S4205 may be implemented as an independent embodiment, which will not be particularly defined herein.

In some embodiments, step S4201 is optional, and one or more of these steps may be omitted or replaced in different embodiments.

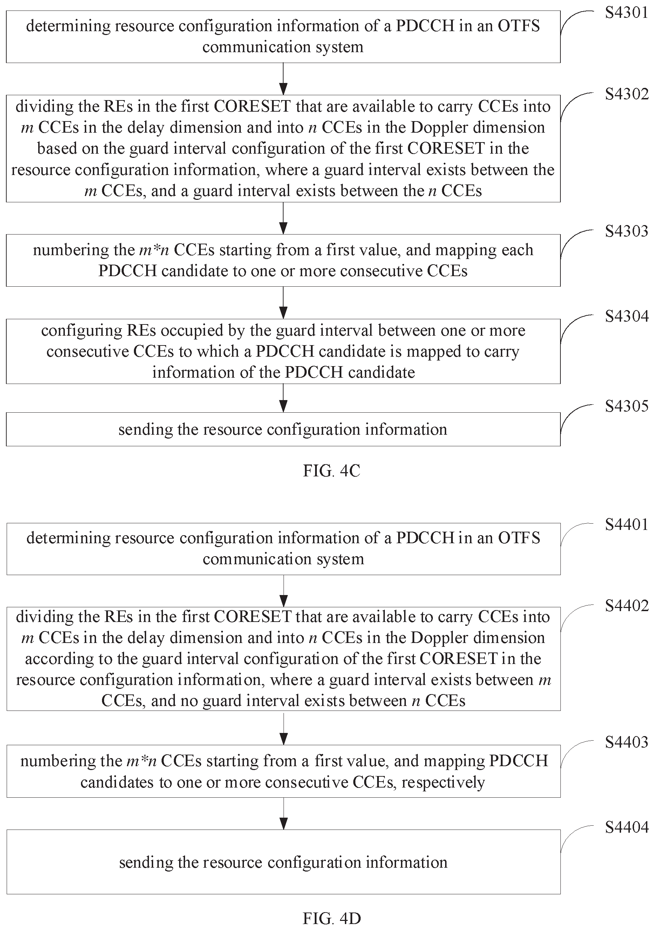

FIG. 4C is a flowchart of a communication method according to an embodiment of the present disclosure. As shown in FIG. 4C, embodiments of the present disclosure relate to a communication method, which may be executed by the network device 101, and the communication method may include but is not limited to the following steps.

Step S4301, resource configuration information of a PDCCH in an OTFS communication system is determined.

Optional implementations of step S4301 may refer to the optional implementations of step S2101 in FIG. 2A and other related parts in the embodiments of FIG. 2A, and thus the description thereof is omitted herein.

Step S4302, REs in the first CORESET that are available to carry CCEs are divided into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs; in other words, the guard interval exists between *m***n* CCEs; and *m* and *n* are each a positive integer.

Optional implementations of step S4302 may refer to the optional implementations of step S2102 in FIG. 2A and other related parts in the embodiments of FIG. 2A, and thus the description thereof is omitted herein.

Step S4303, the *m*n* CCEs are numbered starting from a first value, and each PDCCH candidate is mapped to one or more consecutive CCEs.

Optional implementations of step S4303 may refer to the optional implementation of step S2303 in FIG. 2C and other related parts in the embodiments of FIG. 2C, and thus the description thereof is omitted herein.

Step S4304, REs occupied by the guard interval between one or more consecutive CCEs to which a PDCCH candidate is mapped are configured to carry information of the PDCCH candidate.

Optional implementations of step S4304 may refer to the optional implementation of step S2304 in FIG. 2C and other related parts in the embodiments of FIG. 2C, and thus the description thereof is omitted herein.

Step S4305, the resource configuration information is sent.

Optional implementations of step S4305 may refer to the optional implementations of step S2104 in FIG. 2A and other related parts in the embodiments of FIG. 2A, and thus the description thereof is omitted herein.

The method in the embodiments of the present disclosure may include at least one of step S4301 to step S4305. For example, step S4302+step S4303+step S4304+step S4305 may be implemented as an independent embodiment, step S4301+step S4302+step S4303+step S4304+step S4305 may be implemented as an independent embodiment, which will not be particularly defined herein.

In some embodiments, step S4301 is optional, and one or more of these steps may be omitted or replaced in different embodiments.

FIG. 4D is a flowchart of a communication method according to an embodiment of the present disclosure. As shown in FIG. 4D, embodiments of the present disclosure relate to a communication method, which may be executed by the network device 101, and the communication method may include but is not limited to the following steps.

Step S4401, resource configuration information of a PDCCH in an OTFS communication system is determined.

Optional implementations of step S4401 may refer to the optional implementations of step S2101 in FIG. 2A and other related parts in the embodiments of FIG. 2A, and thus the description thereof is omitted herein.

Step S4402, REs in the first CORESET that are available to carry CCEs are divided into *m* CCEs in the delay dimension and into *n* CCEs in the Doppler dimension based on the guard interval configuration of the first CORESET in the resource configuration information, where *m* and *n* are each a positive integer.

Optional implementations of step S4402 may refer to the optional implementations of step S2402 in FIG. 2D and other related parts in the embodiments of FIG. 2D, and thus the description thereof is omitted herein.

Step S4403, the *m*n* CCEs are numbered starting from a first value, and each PDCCH candidate is mapped to one or more consecutive CCEs.

Optional implementations of step S4403 may refer to the optional implementation of step S2403 in FIG. 2D and other related parts in the embodiments of FIG. 2D, and thus the description thereof is omitted herein.

Step S4404, the resource configuration information is sent.

Optional implementations of step S4404 may refer to the optional implementations of step S2104 in FIG. 2A and other related parts in the embodiments of FIG. 2A, and thus the description thereof is omitted herein.

The method in the embodiments of the present disclosure may include at least one of step S4401 to step S4404. For example, step S4402+step S4403+step S4404 may be implemented as an independent embodiment, step S4401+step S4402+step S4403+step S4404 may be implemented as an independent embodiment, which will not be particularly defined herein.

In some embodiments, step S4401 is optional, and one or more of these steps may be omitted or replaced in different embodiments.

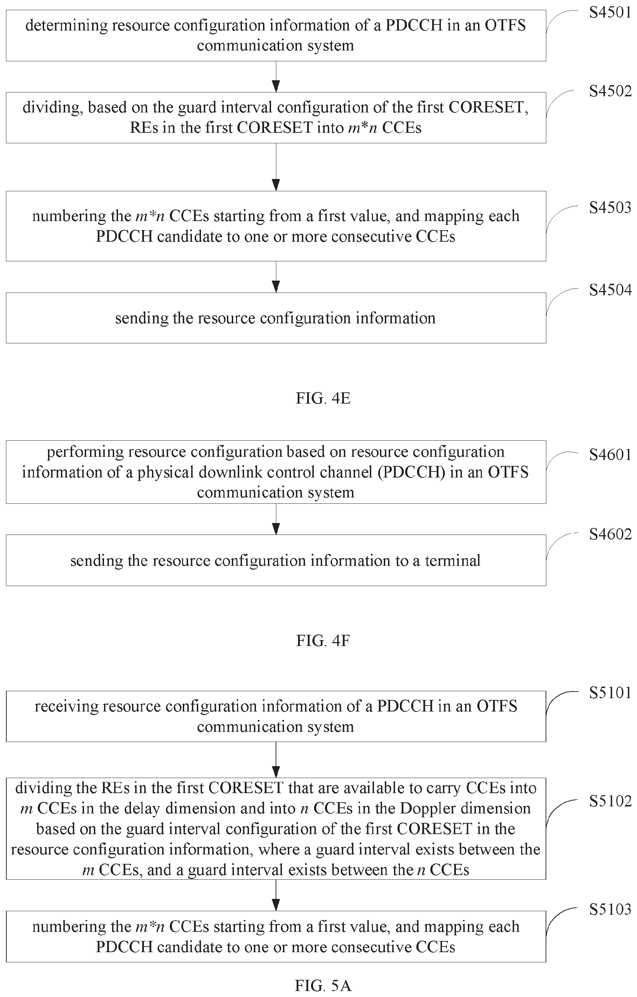

FIG. 4E is a flowchart of a communication method according to an embodiment of the present disclosure. As shown in FIG. 4E, embodiments of the present disclosure relate to a communication method, which may be executed by the network device 101, and the communication method may include but is not limited to the following steps.

Step S4501, resource configuration information of a PDCCH in an OTFS communication system is determined.

Optional implementations of step S4501 may refer to the optional implementations of step S2101 in FIG. 2A and other related parts in the embodiments of FIG. 2A, and thus the description thereof is omitted herein.

Step S4502, based on the guard interval configuration of the first CORESET, REs in the first CORESET are divided into *m***n* CCEs, where *m* and *n* are each a positive integer.

In some embodiments, based on the guard interval configuration of the first CORESET in the resource configuration information, REs that are available to carry CCEs in the first CORESET are divided into *m* CCEs and the guard interval for any one of the *m* CCEs in the delay dimension, and into *n* CCEs and the guard interval for any one of the *n* CCEs in the Doppler dimension. Optional implementations may refer to the optional implementations of step S2202 in FIG. 2B and other related parts in the embodiments of FIG. 2B, and thus the description thereof is omitted herein.

In some embodiments, one CCE among one or more consecutive CCEs to which a PDCCH candidate is mapped is taken as a reference, and the one or more CCEs to which the PDCCH candidate is mapped is adjusted to consecutive REs in the DD domain. Optional implementations may refer to the optional implementations of step S2204 in FIG. 2B and other related parts in the embodiments of FIG. 2B, and thus the description thereof is omitted herein.

In some embodiments, REs occupied by the guard interval between one or more consecutive CCEs to which a PDCCH candidate is mapped are configured to carry information of the PDCCH candidate. Optional implementations may refer to the optional implementations of step S2304 in FIG. 2C and other related parts in the embodiments of FIG. 2C, and thus the description thereof is omitted herein.

In some embodiments, based on the guard interval configuration of the first CORESET, REs in the first CORESET that are available to carry CCEs are divided into *m* CCEs in a delay dimension and into *n* CCEs in a Doppler dimension. Optional implementations may refer to the optional implementations of step S2402 in FIG. 2D and other related parts in the embodiments of FIG. 2D, and thus the description thereof is omitted herein.

Step S4503, the *m*n* CCEs are numbered starting from a first value, and each PDCCH candidate is mapped to one or more consecutive CCEs.

In some embodiments, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down. Optional implementations may refer to the optional implementations of step S2103 in FIG. 2A, step S2204 in FIG. 2B and step S2304 in FIG. 2C and other related parts in the embodiments of FIG. 2A, FIG. 2B and FIG. 2C, and thus the description thereof is omitted herein.

In some embodiments, indices of L CCEs to which a k-th PDCCH candidate with an aggregation level L is mapped are determined as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down. Optional implementations may refer to the optional implementations of step S2403 in FIG. 2D and other related parts in the embodiments of FIG. 2D, and thus the description thereof is omitted herein.

Step S4504, the resource configuration information is sent.

Optional implementations of step S4504 may refer to the optional implementations of step S2104 in FIG. 2A and other related parts in the embodiments of FIG. 2A, and thus the description thereof is omitted herein.

In some embodiments, step S4401 is optional, and one or more of these steps may be omitted or replaced in different embodiments.

FIG. 4F is a flowchart of a communication method according to an embodiment of the present disclosure. As shown in FIG. 4F, embodiments of the present disclosure relate to a communication method, which may be executed by the network device 101, and the communication method may include but is not limited to the following steps.

Step S4601, resource configuration is performed based on resource configuration information of a physical downlink control channel (PDCCH) in an OTFS communication system.

In some embodiments, based on the guard interval configuration of the first CORESET, REs in the first CORESET are divided into *m***n* CCEs, where *m* and *n* are each a positive integer. The *m*n* CCEs are numbered starting from a first value, and each PDCCH candidate is mapped to one or more consecutive CCEs. Optional implementations may refer to the optional implementations of step S2101 in FIG. 2A and other related parts in the embodiments of FIG. 2A, and thus the description thereof is omitted herein.

In some embodiments, possible implementations of dividing the REs in the first CORESET into *m***n* CCEs based on the guard interval configuration of the first CORESET includes: dividing, based on the guard interval configuration of the first CORESET, REs in the first CORESET that are available to carry CCEs into *m* CCEs and the guard interval for any one of the *m* CCEs in the delay dimension, and into *n* CCEs and the guard interval for any one of the *n* CCEs in the Doppler dimension. Optional implementations may refer to the optional implementations of step S2202 and step S2203 in FIG. 2B and other related parts in the embodiments of FIG. 2B, and thus the description thereof is omitted herein.

In some embodiments, one CCE among one or more consecutive CCEs to which a PDCCH candidate is mapped is taken as a reference, and the one or more CCEs to which the PDCCH candidate is mapped is adjusted to consecutive REs in the DD domain. Optional implementations may refer to the optional implementations of step S2205 in FIG. 2B and other related parts in the embodiments of FIG. 2B, and thus the description thereof is omitted herein.

In some embodiments, REs occupied by the guard interval between one or more consecutive CCEs to which a PDCCH candidate is mapped are configured to carry information of the PDCCH candidate. Optional implementations may refer to the optional implementations of step S2305 in FIG. 2C and other related parts in the embodiments of FIG. 2C, and thus the description thereof is omitted herein.

In some embodiments, possible implementations of dividing the REs in the first CORESET into *m***n* CCEs based on the guard interval configuration of the first CORESET includes: dividing, based on the guard interval configuration of the first CORESET, REs in the first CORESET that are available to carry CCEs into *m* CCEs in a delay dimension and into *n* CCEs in a Doppler dimension. Optional implementations may refer to the optional implementations of step S2402 and step S2403 in FIG. 2D and other related parts in the embodiments of FIG. 2D, and thus the description thereof is omitted herein.

In some embodiments, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down. Optional implementations may refer to the optional implementations of step S2104 in FIG. 2A, step S2205 in FIG. 2B and step S2305 in FIG. 2C and other related parts in the embodiments of FIG. 2A, FIG. 2B and FIG. 2C, and thus the description thereof is omitted herein.

In some embodiments, indices of L CCEs to which a k-th PDCCH candidate with an aggregation level L is mapped are determined as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down. Optional implementations may refer to the optional implementations of step S2404 in FIG. 2D and other related parts in the embodiments of FIG. 2D, and thus the description thereof is omitted herein.

Step S4602, the resource configuration information to a terminal is sent.

Optional implementations of step S4602 may refer to the optional implementations of step S2104 in FIG. 2A and other related parts in the embodiments of FIG. 2A, and thus the description thereof is omitted herein.

FIG. 5A is a flowchart of a communication method according to an embodiment of the present disclosure. As shown in FIG. 5A, embodiments of the present disclosure relate to a communication method, which may be executed by the terminal 102, and the communication method may include but is not limited to the following steps.

Step S5101, resource configuration information of a PDCCH in an OTFS communication system is received.

In some embodiments, the resource configuration information may be resource configuration information of the PDCCH in the OTFS communication system.

In some embodiments, the resource configuration information may be obtained by the terminal 102 from the network device 101. For example, the network device 101 sends the resource configuration information to the terminal 102, and correspondingly, the terminal 102 receives the resource configuration information.

Optional implementations of step S5101 may refer to the optional implementations of step S2101 and step S2104 in FIG. 2A and other related parts in the embodiments of FIG. 2A, and thus the description thereof is omitted herein.

Step S5102, REs in the first CORESET that are available to carry CCEs are divided into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs; in other words, the guard interval exists between *m***n* CCEs.

As can be appreciated, the manner in which the terminal 102 performs CCE division on the first CORESET should be consistent with the manner in which the network device performs CCE division on the first CORESET.

Optional implementations of step S5102 may refer to the optional implementations of step S2105 in FIG. 2A and other related parts in the embodiments of FIG. 2A, and thus the description thereof is omitted herein.

Step S5103, the *m*n* CCEs are numbered starting from a first value, and each PDCCH candidate is mapped to one or more consecutive CCEs.

Optional implementations of step S5103 may refer to the optional implementations of step S2106 in FIG. 2A and other related parts in the embodiments of FIG. 2A, and thus the description thereof is omitted herein.

Embodiments of the present disclosure relate to a communication method, which may be executed by the terminal 102, and the communication method may include but is not limited to the following steps.

Step S5201, resource configuration information of a PDCCH in an OTFS communication system is received.

Optional implementations of step S5201 may refer to the optional implementations of step S2101 and step S2104 in FIG. 2A and other related parts in the embodiments of FIG. 2A, and thus the description thereof is omitted herein.

Step S5202, REs in the first CORESET that are available to carry CCEs are divided into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs.

Optional implementations of step S5202 may refer to the optional implementations of step S2106 in FIG. 2B and other related parts in the embodiments of FIG. 2B, and thus the description thereof is omitted herein.

Step S5203, the *m*n* CCEs are numbered starting from a first value, and each PDCCH candidate is mapped to one or more consecutive CCEs.

Optional implementations of step S5203 may refer to the optional implementations of step S2207 in FIG. 2B and other related parts in the embodiments of FIG. 2B, and thus the description thereof is omitted herein.

Step S5204, taking one CCE among one or more consecutive CCEs to which a PDCCH candidate is mapped as a reference, the one or more CCEs to which the PDCCH candidate is mapped are adjusted to consecutive REs in the DD domain, thereby obtaining a mapping relationship between the PDCCH candidates and the CCEs.

Optional implementations of step S5204 may refer to the optional implementations of step S2208 in FIG. 2B and other related parts in the embodiments of FIG. 2B, and thus the description thereof is omitted herein.

Embodiments of the present disclosure relate to a communication method, which may be executed by the terminal 102, and the communication method may include but is not limited to the following steps S5301 to S5304.

Step S5301, resource configuration information of a PDCCH in an OTFS communication system is received.

Optional implementations of step S5301 may refer to the optional implementations of step S2101 and step S2104 in FIG. 2A and other related parts in the embodiments of FIG. 2A, and thus the description thereof is omitted herein.

Step S5302, REs in the first CORESET that are available to carry CCEs are divided into *m* CCEs in the delay dimension and into *n* CCEs in the Doppler dimension based on the guard interval configuration of the first CORESET in the resource configuration information, where a guard interval exists between the *m* CCEs, a guard interval exists between the *n* CCEs.

Optional implementations of step S5302 may refer to the optional implementations of step S2306 in FIG. 2C and other related parts in the embodiments of FIG. 2C, and thus the description thereof is omitted herein.

Step S5303, the *m*n* CCEs are numbered starting from a first value, and each PDCCH candidate is mapped to one or more consecutive CCEs.

In some embodiments, REs occupied by the guard interval between one or more consecutive CCEs to which a PDCCH candidate is mapped are configured to carry information of the PDCCH candidate.

Optional implementations of step S5303 may refer to the optional implementations of step S2307 in FIG. 2C and other related parts in the embodiments of FIG. 2C, and thus the description thereof is omitted herein.

Embodiments of the present disclosure relate to a communication method, which may be executed by the terminal 102, and the communication method may include but is not limited to the following steps S5401 to S5403.

Step S5401, resource configuration information of a PDCCH in an OTFS communication system is received.

Optional implementations of step S5401 may refer to the optional implementations of step S2101 and step S2104 in FIG. 2A and other related parts in the embodiments of FIG. 2A, and thus the description thereof is omitted herein.

Step S5402, REs in the first CORESET that are available to carry CCEs are divided into *m* CCEs in the delay dimension and into *n* CCEs in the Doppler dimension based on the guard interval configuration of the first CORESET in the resource configuration information, where *m* and *n* are each a positive integer.

Optional implementations of step S5402 may refer to the optional implementations of step S2405 in FIG. 2D and other related parts in the embodiments of FIG. 2D, and thus the description thereof is omitted herein.

Step S5403, the *m*n* CCEs are numbered starting from a first value, and each PDCCH candidate is mapped to one or more consecutive CCEs.

Optional implementations of step S5403 may refer to the optional implementations of step S2406 in FIG. 2D and other related parts in the embodiments of FIG. 2D, and thus the description thereof is omitted herein.

Embodiments of the present disclosure relate to a communication method, which may be executed by the terminal 102, and the communication method may include but is not limited to the following steps S5501 to S5503.

Step S5501, resource configuration information of a PDCCH in an OTFS communication system sent by a network device is received.

In some embodiments, the resource configuration information includes a guard interval configuration of a first control resource set (CORESET) in a delay-Doppler (DD) domain.

In some embodiments, the guard interval configuration of the first CORESET includes: part of resource elements (REs) in the first CORESET is used as a guard interval, and the guard interval is configured to separate the first CORESET from other channels and/or other signals.

In some embodiments, the guard interval configuration of the first CORESET includes: an adjacent RE outside the first CORESET is used as a guard interval, the guard interval is configured to separate the first CORESET from other channels and/or other signals, and REs inside the first CORESET are not used as the guard interval.

In some embodiments, the guard interval configuration of the first CORESET includes: a RE between control channel elements (CCEs) divided in the first CORESET is used as a guard interval.

Step S5502, CCEs are formed based on the resource configuration information.

In some embodiments, based on the guard interval configuration of the first CORESET, REs in the first CORESET are divided into *m***n* CCEs; where *m* and *n* are each a positive integer.

In some embodiments, based on the guard interval configuration of the first CORESET, REs in the first CORESET that are available to carry CCEs are divided into *m* CCEs in a delay dimension and into *n* CCEs in a Doppler dimension, where a guard interval exists between the *m* CCEs, and a guard interval exists between the *n* CCEs.

In some embodiments, based on the guard interval configuration of the first CORESET, REs in the first CORESET that are available to carry CCEs are divided into *m* CCEs in a delay dimension and into *n* CCEs in a Doppler dimension.

Step S5503, a PDCCH candidate is mapped to one or more consecutive CCEs.

Optionally, in some embodiments, the terminal 102 may map the PDCCH candidate to one or more consecutive CCEs based on a mapping manner between the PDCCH candidates and the CCEs.

As can be appreciated, the mapping manner between the PDCCH candidates and CCEs on the terminal 102 side is consistent with the mapping manner between the PDCCH candidates and CCEs on the network device side. For example, the mapping manner may be predefined, that is, the network device may map each PDCCH candidate to one or more consecutive CCEs based on the predefined mapping manner, and the terminal side may also map each PDCCH candidate to one or more consecutive CCEs based on the predefined mapping manner after forming CCEs based on the resource configuration information sent by the network device side. For example, the mapping manner may be configured by the network device for the terminal. After forming CCEs based on the resource configuration information sent by the network device side, the terminal may map each PDCCH candidate to one or more consecutive CCEs based on the mapping manner configured by the network device.

In some embodiments, the terminal 102 numbers the *m*n* CCEs starting from a first value, and maps each PDCCH candidate to one or more consecutive CCEs.

In some embodiments, one CCE among one or more consecutive CCEs to which a PDCCH candidate is mapped is taken as a reference, and the one or more CCEs to which the PDCCH candidate is mapped are adjusted to consecutive REs in the DD domain.

In some embodiments, REs occupied by the guard interval between one or more consecutive CCEs to which a PDCCH candidate is mapped are configured to carry information of the PDCCH candidate.

In some embodiments, indices of the L CCEs to which a k-th PDCCH candidate with an aggregation level L is mapped is kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down.

In some embodiments, indices of L CCEs to which a k-th PDCCH candidate with an aggregation level L is mapped are determined as k(L+c)+F, where $k = 0 , 1 , … , \left⌊\frac{m ∗ n + c}{L + c}\right⌋ - 1$;

F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down.

The implementations of the method on the terminal 102 side in the embodiments of the present disclosure may refer to the relevant description of the terminal 102 side in the above-mentioned communication system 100, and thus the description thereof is omitted herein.

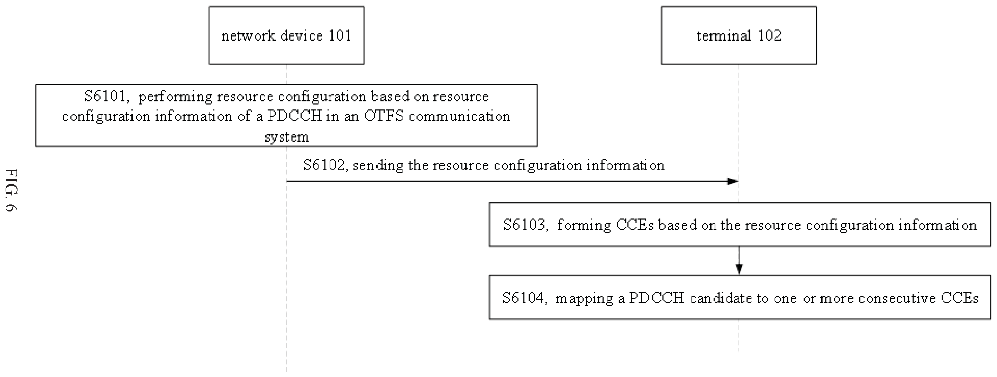

FIG. 6 is an interactive schematic diagram of a communication method according to an embodiment of the present disclosure. As shown in FIG. 6, the method in the embodiments of the present disclosure can be applied to the communication system 100, and the method includes but is not limited to the following steps.

In step S6101, the network device 101 performs resource configuration based on resource configuration information of a PDCCH in an OTFS communication system.

Optional implementations of step S6101 may refer to the optional implementations of step S2101 to step S2103 in FIG. 2A, step S2201 to step S2204 in FIG. 2B, step S2302 to step S2304 in FIG. 2C, step S2402 to step S2403 in FIG. 2D and other related parts in the embodiments of FIG. 2A, FIG. 2B, FIG. 2C and FIG. 2D, and thus the description thereof is omitted herein.

In step S6102, the network device 101 sends the resource configuration information to the terminal 102.

Optional implementations of step S6102 may refer to the optional implementations of step S2104 in FIG. 2A and other related parts in the embodiments of FIG. 2A, and thus the description thereof is omitted herein.

In step S6103, the terminal 102 forms CCEs based on the resource configuration information.

Optional implementations of step S6103 may refer to the optional implementations of step S2105 in FIG. 2A, step S2206 in FIG. 2B, step S2306 in FIG. 2C, step S2405 in FIG. 2D and other related parts in the embodiments of FIG. 2A, FIG. 2B, FIG. 2C and FIG. 2D, and thus the description thereof is omitted herein.

In step S6104, the terminal 102 maps a PDCCH candidate to one or more consecutive CCEs.

Optional implementations of step S6104 may refer to the optional implementations of step S2106 in FIG. 2A, step S2207 to step S2208 in FIG. 2B, step S2307 in FIG. 2C, step S2406 in FIG. 2D and other related parts in the embodiments of FIG. 2A, and thus the description thereof is omitted herein.

In some embodiments, the above-mentioned method may include the methods in the above-mentioned embodiments of the network device side, terminal side, etc., and thus the description thereof is omitted herein.

It is worth noting that, considering the influence of the guard interval, the present disclosure proposes a method of allocating CCEs, processing the guard intervals between CCEs and between PDCCHs, thereby improving the transmission performance of PDCCHs. The following will be described exemplarily from Embodiment 1 and Embodiment 2.

### Embodiment 1

One control channel resource set (CORESET) may be mapped to M×N continuous REs in the DD domain. The REs of the CORESET may be divided into multiple CCEs, and a guard interval is inserted between adjacent CCEs. Since the PDCCH generally adopts a more robust adjustment manner with a stronger anti-interference capability, the above-mentioned inserted guard interval can be relatively small and is only used to combat the relatively strong multipath of the channel. FIG. 3A and FIG. 3B are each a schematic diagram of CORESET and CCE resource mapping. In FIG. 3A, outer REs within the CORESET are used as the guard interval, so CCE division may only be performed on REs located more inwardly in the first CORESET. In FIG. 3B, adjacent REs outside the CORESET are used as the guard interval, so CCE division may be performed on the entire first CORESET. For both methods of FIG. 3A and FIG. 3B, the guard interval of the CORESET may be configured through a broadcast signaling or an RRC signaling, so that the UE may use the guard interval to detect the PDCCH.

In some embodiments, in one CORESET, multiple CCEs and guard intervals for the CCEs may be divided in the delay dimension. However, there is only one CCE and its guard interval in the Doppler dimension. FIG. 3A and FIG. 3B are each a schematic diagram of such a structure. Alternatively, in one CORESET, multiple CCEs and guard intervals for the CCEs may be divided in the Doppler dimension. However, there is only one CCE and its guard interval in the delay dimension. Alternatively, in one CORESET, A CCEs and guard intervals for the CCEs may be divided in the delay dimension, and B CCEs and guard intervals for the CCEs may be divided in the Doppler dimension, so that the total quantity of CCEs is AB.

In some embodiments, a first manner of mapping CCEs to PDCCHs is as follows. The resource mapping of CCEs in one CORESET may be fixed. The divided CCEs are numbered starting from 0, and one PDCCH may be mapped to one or more consecutive CCEs. For example, indices of CCEs to which a k-th PDCCH candidate with an aggregation level L is mapped are kL+[0,1, ..., L-1], where $k = 0 , 1 , … , \left⌊\frac{{N}_{CCE}}{L}\right⌋ - 1$; and *N_{CCE}* is a total quantity of CCEs in the CORESET.

In some embodiments, a second manner of mapping CCEs to PDCCHs is as follows. The resource mapping of CCEs in one CORESET is adjusted based on the aggregation level of the PDCCH candidate. The divided CCEs are numbered starting from 0, and one PDCCH may be mapped to one or more consecutive CCEs. For example, indices of CCEs to which a k-th PDCCH candidate with an aggregation level L is mapped are kL+[0,1, ..., L-1], where $k = 0 , 1 , … , \left⌊\frac{{N}_{CCE}}{L}\right⌋ - 1$ ; and *N_{CCE}* is a total quantity of CCEs in the CORESET. For a k-th PDCCH candidate with an aggregation level L, taking one CCE with the smallest index (such as index kL) to which the k-th PDCCH candidate with the aggregation level L is mapped as a reference, L CCEs to which the k-th PDCCH candidate with the aggregation level L is mapped are adjusted to continuous REs in the DD domain, while the total number of occupied REs is still the total number of REs of L CCEs. For example, it is assumed that there are two PDCCH candidates in FIG. 3C, each with an aggregation level of 2. By adjusting the CCE position, the interval between the two PDCCHs is increased to 2 samples, so as to reduce the interference between PDCCHs.

In some embodiments, a third manner of mapping CCEs to PDCCHs is as follows. The resource mapping of CCEs in one CORESET may be fixed. The divided CCEs are numbered starting from 0, and one PDCCH may be mapped to one or more consecutive CCEs. For example, indices of CCEs to which a k-th PDCCH candidate with an aggregation level L is mapped are kL+[0,1, ..., L-1], where $k = 0 , 1 , … , \left⌊\frac{{N}_{CCE}}{L}\right⌋ - 1$; and *N_{CCE}* is a total quanitity of CCEs in the CORESET. For a PDCCH candidate with an aggregation level L, the REs of the guard interval between the L CCEs to which this PDCCH candidate is mapped may be used to carry the information of this PDCCH. For example, it is assumed that there are two PDCCH candidates in FIG. 3D, each with an aggregation level of 2. The guard interval between the 2 CCEs of one PDCCH candidate is also used to send the information of this PDCCH. The REs used as the guard interval may adopt the precoder of one of the 2 CCEs adjacent to the REs.

### Embodiment 2

One control channel resource set (CORESET) may be mapped to *M*×*N* continuous REs in the DD domain. The REs of the CORESET may be divided into multiple CCEs, and no guard interval is reserved between adjacent CCEs. FIG. 3E is a schematic diagram of CORESET and CCE resource mapping. With this method, the quantity of CCEs divided in the CORESET increases.

In some embodiments, in one CORESET, multiple CCEs may be divided in the delay dimension. However, there is only one CCE in the Doppler dimension. FIG. 3E is a schematic diagram of such a structure. Alternatively, in one CORESET, multiple CCEs may be divided in the Doppler dimension. However, there is only one CCE in the delay dimension. Alternatively, in one CORESET, A CCEs may be divided in the delay dimension, and B CCEs may be divided in the Doppler dimension, so that the total quantity of CCEs is AB. The divided CCEs are numbered starting from 0, and one PDCCH may be mapped to one or more consecutive CCEs.

In some embodiments, a first manner of mapping CCEs to PDCCHs is as follows. Indices of CCEs to which a k-th PDCCH candidate with an aggregation level L is mapped are kL+[0,1, ..., L-1], where $k = 0 , 1 , … , \left⌊\frac{{N}_{CCE}}{L}\right⌋ - 1$; and *N_{CCE}* is a total quantity of CCEs in the CORESET.

In some embodiments, a second manner of mapping CCEs to PDCCHs is as follows. Indices of CCEs to which a k-th PDCCH candidate with an aggregation level L is mapped are k(L+c)+[0,1, ..., L-1], where $k = 0 , 1 , … , \left⌊\frac{{N}_{CCE}}{L}\right⌋ - 1$; c is a quantity of CCEs serving as the guard interval; and *N_{CCE}* is a total quantity of CCEs in the CORESET. As shown in FIG. 3F, with this method, one CCE (such as CCE3 in FIG. 3F) is used as a guard interval between two PDCCH candidates with the same aggregation level.

The embodiments of the present disclosure further provide an apparatus for implementing any of the above methods. For example, an apparatus is provided, and the apparatus includes units or modules for implementing the steps executed by the network device in any of the above methods. As another example, another apparatus is provided, including units or modules for implementing the steps executed by the terminal in any of the above methods.

It should be appreciated that the division of units or modules in the above apparatus is only a division of logical functions. In actual implementation, they can be fully or partially integrated into one physical entity, or can be physically separate. In addition, the units or modules in the apparatus can be implemented in the form of software called by a processor. For example, the apparatus includes a processor, the processor is connected to a memory, instructions are stored in the memory, and the processor calls the instructions stored in the memory to implement any of the above methods or to implement the functions of the units or modules of the above apparatus, where the processor is, for example, a general-purpose processor, such as a Central Processing Unit (CPU) or microprocessor, and the memory is a memory inside or outside the apparatus. Alternatively, the units or modules in the apparatus can be implemented in the form of hardware circuits. The functions of some or all units or modules can be implemented through the design of the hardware circuits. The hardware circuits can be understood as one or more processors. For example, in one implementation, the hardware circuits are application-specific integrated circuits (ASICs), and by designing the logical relationships of the circuit elements, the functions of some or all of the units or modules described above are implemented. As another example, in another implementation, the hardware circuits can be implemented by programmable logic devices (PLDs). Taking Field Programmable Gate Arrays (FPGAs) as an example, they can include a large number of logic gates, and the connection relationships between the logic gates are configured through configuration files to implement the functions of some or all of the units or modules described above. All units or modules of the above apparatus can be fully implemented in the form of software called by a processor, or fully implemented in the form of hardware circuits, or partially implemented in the form of software called by a processor and the remaining part implemented in the form of hardware circuits.

In the embodiments of the present disclosure, a processor is a circuit with signal processing capability. In one implementation, the processor can be a circuit with instruction reading and execution capability, such as a Central Processing Unit (CPU), microprocessor, graphics processing unit (GPU) (which can be understood as a microprocessor), or digital signal processor (DSP), etc. In another implementation, the processor can implement certain functions through the logical relationships of hardware circuits. The logical relationships of the hardware circuits can be fixed or reconfigurable. For example, the processor can be a hardware circuit implemented by an application-specific integrated circuit (ASIC) or a programmable logic device (PLD), such as an FPGA. In reconfigurable hardware circuits, the process of the processor loading configuration files to implement hardware circuit configuration can be understood as the processor loading instructions to implement the functions of some or all of the units or modules described above. In addition, it can also be a hardware circuit designed for artificial intelligence, which can be understood as an ASIC, such as a Neural Network Processing Unit (NPU), Tensor Processing Unit (TPU), Deep learning Processing Unit (DPU), etc.

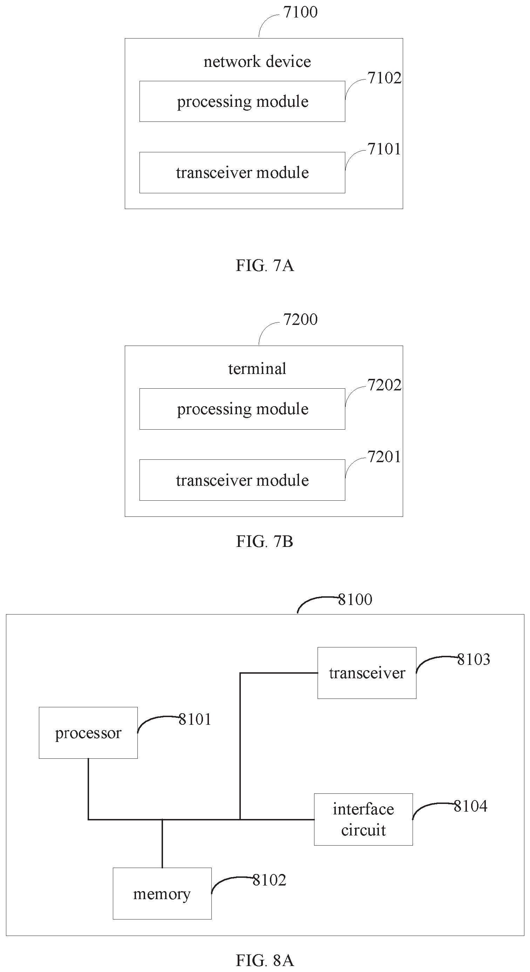

FIG. 7A is a schematic diagram of a network device according to an embodiment of the present disclosure. As shown in FIG. 7A, the network device 7100 may include: at least one of a transceiver module 7101 and a processing module 7102. In some embodiments, the processing module is configured to perform resource configuration based on resource configuration information of a physical downlink control channel (PDCCH) in an orthogonal time frequency and space (OTFS) communication system; and the transceiver module is configured to send the resource configuration information to a terminal.

In some embodiments, the resource configuration information includes a guard interval configuration of a first control resource set (CORESET) in a delay-Doppler (DD) domain.

In some embodiments, the guard interval configuration of the first CORESET includes: part of resource elements (REs) in the first CORESET is used as a guard interval, and the guard interval is configured to separate the first CORESET from other channels and/or other signals.

In some embodiments, the guard interval configuration of the first CORESET includes: an adjacent RE outside the first CORESET is used as a guard interval, the guard interval is configured to separate the first CORESET from other channels and/or other signals, and REs inside the first CORESET are not used as the guard interval.

In some embodiments, the guard interval configuration of the first CORESET includes: a RE between control channel elements (CCEs) divided in the first CORESET is used as a guard interval.

In some embodiments, the processing module is specifically configured to: divide, based on the guard interval configuration of the first CORESET, REs in the first CORESET into *m*n* CCEs; where *m* and *n* are each a positive integer; and number the *m*n* CCEs starting from a first value, and map each PDCCH candidate to one or more consecutive CCEs.

In some embodiments, the processing module is specifically configured to: divide, based on the guard interval configuration of the first CORESET, REs in the first CORESET that are available to carry CCEs into *m* CCEs in a delay dimension and into *n* CCEs in a Doppler dimension, where a guard interval exists between the *m* CCEs, and a guard interval exists between the *n* CCEs.

In some embodiments, the processing module is further configured to: take one CCE among one or more consecutive CCEs to which a PDCCH candidate is mapped as a reference, and adjust the one or more CCEs to which the PDCCH candidate is mapped to consecutive REs in the DD domain.

In some embodiments, the processing module is further configured to: configure REs occupied by the guard interval between one or more consecutive CCEs to which a PDCCH candidate is mapped to carry information of the PDCCH candidate.

In some embodiments, the processing module is specifically configured to: divide, based on the guard interval configuration of the first CORESET, REs in the first CORESET that are available to carry CCEs into *m* CCEs in a delay dimension and into *n* CCEs in a Doppler dimension.

In some embodiments, the processing module is specifically configured to: determine indices of L CCEs to which a k-th PDCCH candidate with an aggregation level L is mapped as kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down.

In some embodiments, the processing module is specifically configured to: determine indices of L CCEs to which a k-th PDCCH candidate with an aggregation level L is mapped as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down.

Optionally, the transceiver module is configured to execute at least one of the communication steps such as sending and/or receiving executed by the network device 101 in any of the above methods (for example, step S2104, step S2205, step S2305, step S2404, but not limited thereto), and thus the description thereof is omitted herein. Optionally, the processing module is configured to execute at least one of the other steps (for example, steps S2101-step S2103, steps S2201-step S2204, steps S2301-step S2304, steps S2401-step S2403, but not limited thereto) executed by the terminal device 102 in any of the above methods, and thus the description thereof is omitted herein.

FIG. 7B is a schematic diagram of a terminal according to an embodiment of the present disclosure. As shown in FIG. 7B, the terminal 7200 may include: at least one of a transceiver module 7201 and a processing module 7202. In some embodiments, the transceiver module is configured to receive resource configuration information of a physical downlink control channel (PDCCH) in an orthogonal time-frequency-space (OTFS) communication system sent by the network device; the processing module is configured to form control channel elements (CCEs) based on the resource configuration information, and the processing module is further configured to map a PDCCH candidate to one or more consecutive CCEs.

In some embodiments, the resource configuration information includes a guard interval configuration of a first control resource set (CORESET) in a delay-Doppler (DD) domain.

In some embodiments, the guard interval configuration of the first CORESET includes: part of resource elements (REs) in the first CORESET is used as a guard interval, and the guard interval is configured to separate the first CORESET from other channels and/or other signals.

In some embodiments, the guard interval configuration of the first CORESET includes: an adjacent RE outside the first CORESET is used as a guard interval, the guard interval is configured to separate the first CORESET from other channels and/or other signals, and REs inside the first CORESET are not used as the guard interval.

In some embodiments, the processing module is specifically configured to divide, based on the guard interval configuration of the first CORESET, REs in the first CORESET into *m***n* CCEs; where *m* and *n* are each a positive integer.

In some embodiments, the processing module is specifically configured to: divide, based on the guard interval configuration of the first CORESET, REs in the first CORESET that are available to carry CCEs into *m* CCEs in a delay dimension and into *n* CCEs in a Doppler dimension, where a guard interval exists between the *m* CCEs, and a guard interval exists between the *n* CCEs.

In some embodiments, the processing module is specifically configured to number the *m*n* CCEs starting from a first value, and map each PDCCH candidate to one or more consecutive CCEs.

In some embodiments, the processing module is further configured to: adjust the one or more CCEs to which the PDCCH candidate is mapped to consecutive REs in the DD domain by taking one CCE among one or more consecutive CCEs to which a PDCCH candidate is mapped as a reference.

In some embodiments, REs occupied by the guard interval between one or more consecutive CCEs to which a PDCCH candidate is mapped are configured to carry information of the PDCCH candidate.

In some embodiments, the processing module is specifically configured to: divide, based on the guard interval configuration of the first CORESET, REs in the first CORESET that are available to carry CCEs into *m* CCEs in a delay dimension and into *n* CCEs in a Doppler dimension.

In some embodiments, mapping each PDCCH candidate to the one or more consecutive CCEs includes: determining indices of L CCEs to which a k-th PDCCH candidate with an aggregation level L is mapped as kL+F, where $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down.

In some embodiments, mapping each PDCCH candidate to the one or more consecutive CCEs includes: determining indices of L CCEs to which a k-th PDCCH candidate with an aggregation level L is mapped as k(L+c)+F, where $k = 0 , 1 , … , \left⌊\frac{m ∗ n + c}{L + c}\right⌋ - 1$; F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down.

Optionally, the transceiver module is configured to execute at least one of the communication steps such as sending and/or receiving executed by the terminal 102 in any of the above methods, and thus the description thereof is omitted herein. Optionally, the processing module is configured to execute at least one of the other steps (such as step S2105-step S2106, step S2206-step S2208, step S2306-step S2307, step S2405-step S2406, but not limited to this) executed by the terminal 102 in any of the above methods, and thus the description thereof is omitted herein.

In some embodiments, a transceiver module may include a sending module and/or a receiving module. The sending module and receiving module may be separate or integrated. Optionally, terms such as transceiver module and transceiver, may be used interchangeably.

In some embodiments, the processing module may be a module or include multiple sub-modules. Optionally, the multiple submodules execute part or all of the steps required to be executed by the processing module. Optionally, the processing module and the processor may be used interchangeably.

FIG. 8A is a schematic diagram of a communication device 8100 according to an embodiment of the present disclosure. The communication device 8100 may be a network device (e.g., an access network device, a core network device, etc.), or a terminal (e.g., a user equipment, etc.), or a chip, a chip system, or a processor that supports the network device to implement any of the above methods, or a chip, a chip system, or a processor that supports the terminal to implement any of the above methods. The communication device 8100 may be used to implement the method described in the above method embodiments, and the details may refer to the description in the above method embodiments.

As shown in FIG. 8A, the communication device 8100 includes one or more processors 8101. The processor 8101 may be a general-purpose processor or a special-purpose processor, etc., such as a baseband processor or a central processor. The baseband processor may be used to process communication protocols and communication data. The central processor may be used to control the communication device (e.g., a base station, baseband chip, terminal device, terminal device chip, DU or CU, etc.), execute programs, and process program data. Optionally, the communication device 8100 is used to execute any of the above methods. Optionally, one or more processors 8101 are used to call instructions so that the communication device 8100 executes any of the above methods.

In some embodiments, the communication device 8100 further includes one or more transceivers 8102. When the communication device 8100 includes one or more transceivers 8102, the transceivers 8102 perform at least one of the communication steps such as sending and/or receiving in the above method (for example, step S2105, step S2206, step S2306, step S2405, but not limited thereto), and the processor 8101 performs at least one of the other steps (for example, step S2101-step S2104, step S2201-step S2205, step S2301-step S2305, step S2401-step S2404, step S2106-step S2107, step S2207-step S2208, step S2307, step S2406-step S2407, but not limited thereto). In an optional embodiment, the transceiver may include a receiver and/or a transmitter, and the receiver and the transmitter may be separated or integrated. Optionally, terms such as transceiver, transceiver unit, transceiver circuit, interface circuit, interface, etc. may be used interchangeably.

Terms such as transmitter, transmitting unit, transmitting circuit, etc., may be used interchangeably. Terms such as receiver, receiving unit, receiving circuit, etc., may be used interchangeably.

In some embodiments, the communication device 8100 further includes one or more memories 8103 for storing data. Optionally, all or part of the memories 8103 may also be outside the communication device 8100. In an optional embodiment, the communication device 8100 may include one or more interface circuits 8104. Optionally, the interface circuit 8104 is connected to the memory 8102, and the interface circuit 8104 may be used to receive data from the memory 8102 or other devices, and may be used to send data to the memory 8102 or other devices. For example, the interface circuit 8104 may read the data stored in the memory 8102 and send the data to the processor 8101.

The communication device 8100 described in the above embodiments may be a network device or a terminal, but the scope of the communication device 6100 in the present disclosure is not limited to this. The structure of the communication device 8100 is not limited by FIG. 8A. The communication device may be an independent device or part of a larger device. For example, the communication device may be: 1) an independent integrated circuit (IC), or chip, or chip system or subsystem; 2) a set of one or more ICs, optionally, the IC set may also include storage components for storing data and programs; 3) an ASIC, such as a modem (Modem); 4) a module that may be embedded in other devices; 5) a receiver, terminal device, smart terminal device, cellular phone, wireless device, handset, mobile unit, vehicle-mounted device, network device, cloud device, artificial intelligence device, etc.; 6) others, etc.

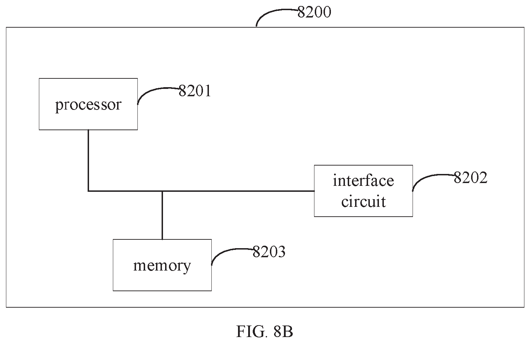

FIG. 8B is a schematic structural diagram of a chip 8200 according to an embodiment of the present disclosure. For the case where the communication device 8100 is a chip or chip system, reference may be made to the schematic structural diagram of the chip 8200 shown in FIG. 8B, but the communication device 8100 is not limited thereto.

The chip 8200 includes one or more processors 8201. The chip 8200 is configured to execute any of the above methods.

In some embodiments, the chip 8200 further includes one or more interface circuits 8202. Optionally, terms such as interface circuit, interface, and transceiver pin may be used interchangeably. In some embodiments, the chip 8200 further includes one or more memories 8203 for storing data. Optionally, all or part of the memories 8203 may be located outside the chip 8200. Optionally, the interface circuit 8202 is connected to a memory 8203. The interface circuit 8202 may be used to receive signals from the memory 8203 or other devices, and may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving in the above method (for example, step S2105, step S2206, step S2306, step S2405, but not limited thereto). The interface circuit 8202 performing the communication steps such as sending and/or receiving in the above method, for example, means that the interface circuit 8202 performs data interaction between the processor 8201, the chip 8200, the memory 8203 or the transceiver device. In some embodiments, the processor 8201 performs at least one of the other steps (for example, steps S2101-step S2104, steps S2201-step S2205, steps S2301-step S2305, steps S2401-step S2404, steps S2106-step S2107, steps S2207-step S2208, step S2307, steps S2406-step S2407, but not limited thereto).

The present disclosure further proposes a storage medium. The storage medium stores therein instructions which, when run on the communication device 8100, cause the communication device 8100 to perform any of the above methods. Optionally, the storage medium is an electronic storage medium. Optionally, the storage medium is a computer-readable storage medium, but not limited thereto. It may be also a storage medium readable by other devices. Optionally, the storage medium may be a non-transitory storage medium, but not limited thereto. It may also be a transitory storage medium.

The present disclosure further proposes a program product. When the program product is executed by the communication device 8100, it causes the communication device 8100 to perform any of the above methods. Optionally, the program product is a computer program product.

The present disclosure further proposes a computer program. When run on a computer, it causes the computer to perform any of the above methods.

In the above embodiments, it may be implemented in whole or in part by software, hardware, firmware or any combination thereof. When implemented by software, it may be implemented in whole or in part in the form of a computer program product. The computer program product includes one or more computer programs. When the computer program is loaded and executed on a computer, the process or function described in the embodiments of the present disclosure is generated in whole or in part. The computer may be a general-purpose computer, a special-purpose computer, a computer network, or other programmable device. The computer program may be stored in a computer-readable storage medium, or transmitted from one computer-readable storage medium to another computer-readable storage medium. For example, the computer program may be transmitted from a website site, computer, server or data center by wired (e.g., coaxial cable, optical fiber, digital subscriber line (digital subscriber line, DSL)) or wireless (e.g., infrared, wireless, microwave, etc.) mode to another website site, computer, server or data center. The computer-readable storage medium may be any available medium that a computer can access or a data storage device such as a server or data center that includes one or more available media integrated. The available medium may be a magnetic medium (e.g., a floppy disk, a hard disk, a magnetic tape), an optical medium (e.g., a high-density digital video disc (DVD)), or a semiconductor medium (e.g., a solid-state disk (SSD)).

Those of ordinary skill in the art may appreciate that the units and algorithm steps of each example described in conjunction with the embodiments disclosed herein may be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of this disclosure.

Those skilled in the art can clearly understand that, for the convenience and brevity of description, the specific working processes of the system, apparatus and units described above can refer to the corresponding processes in the aforementioned method embodiments, and thus the description thereof is omitted herein.

The aforementioned are merely specific embodiments of the present disclosure, but the scope of the present disclosure is not limited thereto. Any modifications or replacements that would easily occur to a person skilled in the art, without departing from the technical scope disclosed in the disclosure, should be encompassed in the scope of the present disclosure. Therefore, the scope of the present disclosure shall be subject to the scope defined by the appended claims.

## Claims

1. A communication method, comprising:
performing, by a network device, resource configuration based on resource configuration information of a physical downlink control channel (PDCCH) in an orthogonal time frequency and space (OTFS) communication system; and
sending, by the network device, the resource configuration information to a terminal.

2. The method according to claim 1, wherein the resource configuration information comprises a guard interval configuration of a first control resource set (CORESET) in a delay-Doppler (DD) domain.

3. The method according to claim 2, wherein the guard interval configuration of the first CORESET comprises: part of resource elements (REs) in the first CORESET is used as a guard interval, and the guard interval is configured to separate the first CORESET from other channels and/or other signals.

4. The method according to claim 2, wherein the guard interval configuration of the first CORESET comprises: an adjacent RE outside the first CORESET is used as a guard interval, and the guard interval is configured to separate the first CORESET from other channels and/or other signals.

5. The method according to claim 2, wherein the guard interval configuration of the first CORESET comprises: a RE between control channel elements (CCEs) divided in the first CORESET is used as a guard interval.

6. The method according to any one of claims 2 to 5, wherein performing by the network device resource configuration on a PDCCH resource based on the resource configuration information comprises:
dividing, based on the guard interval configuration of the first CORESET, REs in the first CORESET into *m***n* CCEs, wherein *m* and *n* are each a positive integer; and
numbering the *m***n* CCEs starting from a first value, and mapping each PDCCH candidate to one or more consecutive CCEs.

7. The method according to claim 6, wherein dividing the REs in the first CORESET into *m*n* CCEs based on the guard interval configuration of the first CORESET comprises:
dividing, based on the guard interval configuration of the first CORESET, REs in the first CORESET that are available to carry CCEs into *m* CCEs in a delay dimension and into *n* CCEs in a Doppler dimension, wherein a guard interval exists between the *m* CCEs, and a guard interval exists between the n CCEs.

8. The method according to claim 6 or 7, further comprising:
taking one CCE among one or more consecutive CCEs to which a PDCCH candidate is mapped as a reference, and adjusting the one or more CCEs to which the PDCCH candidate is mapped to consecutive REs in the DD domain.

9. The method according to claim 6 or 7, further comprising:
configuring REs occupied by the guard interval between one or more consecutive CCEs to which a PDCCH candidate is mapped to carry information of the PDCCH candidate.

10. The method according to claim 6, wherein dividing the REs in the first CORESET into *m*n* CCEs based on the guard interval configuration of the first CORESET comprises:
dividing, based on the guard interval configuration of the first CORESET, REs in the first CORESET that are available to carry CCEs into *m* CCEs in a delay dimension and into *n* CCEs in a Doppler dimension.

11. The method according to any one of claims 6 to 10, wherein numbering the *m*n* CCEs starting from the first value and mapping each PDCCH candidate to the one or more consecutive CCEs comprises:
determining indices of L CCEs to which a k-th PDCCH candidate with an aggregation level L is mapped as kL+F, wherein $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET; and └┘ denotes an operation of rounding down.

12. The method according to claim 10, wherein numbering the *m*n* CCEs starting from the first value and mapping each PDCCH candidate to the one or more consecutive CCEs comprises:
determining indices of L CCEs to which a k-th PDCCH candidate with an aggregation level L is mapped as k(L+c)+F, wherein $k = 0 , 1 , … , \left⌊\frac{m ∗ n + c}{L + c}\right⌋ - 1$; F=0,...,L-1; L is a quantity of CCEs to which the k-th PDCCH candidate is mapped; *m*n* is a total quantity of CCEs in the first CORESET; c is a quantity of CCEs serving as the guard interval; and └┘ denotes an operation of rounding down.

13. A communication method, comprising:
receiving, by a terminal, resource configuration information of a physical downlink control channel (PDCCH) in an orthogonal time-frequency-space (OTFS) communication system sent by a network device;
forming, by the terminal, control channel elements (CCEs) based on the resource configuration information; and
mapping, by the terminal, a PDCCH candidate to one or more consecutive CCEs.

14. The method according to claim 13, wherein the resource configuration information comprises a guard interval configuration of a first control resource set (CORESET) in a delay-Doppler (DD) domain.

15. The method according to claim 14, wherein the guard interval configuration of the first CORESET comprises: part of resource elements (REs) in the first CORESET is used as a guard interval, and the guard interval is configured to separate the first CORESET from other channels and/or other signals.

16. The method according to claim 14, wherein the guard interval configuration of the first CORESET comprises: an adjacent RE outside the first CORESET is used as a guard interval, and the guard interval is configured to separate the first CORESET from other channels and/or other signals.

17. The method according to claim 14, wherein the guard interval configuration of the first CORESET comprises: a RE between CCEs divided in the first CORESET is used as a guard interval.

18. The method according to any one of claims 14 to 17, wherein forming by the terminal CCEs based on the resource configuration information comprises:
dividing, based on the guard interval configuration of the first CORESET, REs in the first CORESET into *m***n* CCEs; wherein *m* and *n* are each a positive integer.

19. The method according to claim 18, wherein dividing the REs in the first CORESET into *m***n* CCEs based on the guard interval configuration of the first CORESET comprises:
dividing, based on the guard interval configuration of the first CORESET, REs in the first CORESET that are available to carry CCEs into *m* CCEs in a delay dimension and into *n* CCEs in a Doppler dimension, wherein a guard interval exists between the *m* CCEs, and a guard interval exists between the *n* CCEs.

20. The method according to claim 18 or 19, wherein mapping by the terminal the PDCCH candidate to one or more consecutive CCEs comprises:
numbering, by the terminal, the *m***n* CCEs starting from a first value, and mapping each PDCCH candidate to one or more consecutive CCEs.

21. The method according to claim 20, further comprising:
taking one CCE among one or more consecutive CCEs to which a PDCCH candidate is mapped as a reference, and adjusting the one or more CCEs to which the PDCCH candidate is mapped to consecutive REs in the DD domain.

22. The method according to claim 20, wherein REs occupied by the guard interval between one or more consecutive CCEs to which a PDCCH candidate is mapped carry information of the PDCCH candidate.

23. The method according to claim 18, wherein dividing the REs in the first CORESET into *m***n* CCEs based on the guard interval configuration of the first CORESET comprises:
dividing, based on the guard interval configuration of the first CORESET, REs in the first CORESET that are available to carry CCEs into *m* CCEs in a delay dimension and into *n* CCEs in a Doppler dimension.

24. The method according to any one of claims 20 to 23, wherein numbering the *m*n* CCEs starting from the first value and mapping each PDCCH candidate to the one or more consecutive CCEs comprises:
determining indices of L CCEs to which a k-th PDCCH candidate with an aggregation level L is mapped as kL+F, wherein $k = 0 , 1 , … , \left⌊\frac{m ∗ n}{L}\right⌋ - 1$; F=0,...,L-1; L is a quantity of CCEs to which the k-th PDCCH candidate is mapped; *m*n* is a total quantity of CCEs in the first CORESET, and └┘ denotes an operation of rounding down.

25. The method according to claim 23, wherein numbering the *m*n* CCEs starting from the first value and mapping each PDCCH candidate to the one or more consecutive CCEs comprises:
determining indices of L CCEs to which a k-th PDCCH candidate with an aggregation level L is mapped as k(L+c)+F, wherein $k = 0 , 1 , … , \left⌊\frac{m ∗ n + c}{L + c}\right⌋ - 1$; F=0,...,L-1; L is a quantity of CCEs to which the k-th PDCCH candidate is mapped, *m*n* is a total quantity of CCEs in the first CORESET, c is a quantity of CCEs serving as the guard interval, and └┘ denotes an operation of rounding down.

26. A network device, comprising:
a processing module, configured to perform resource configuration based on resource configuration information of a physical downlink control channel (PDCCH) in an orthogonal time frequency and space (OTFS) communication system; and
a transceiver module, configured to send the resource configuration information to a terminal.

27. A terminal, comprising:
a transceiver module, configured to receive resource configuration information of a physical downlink control channel (PDCCH) in an orthogonal time-frequency-space (OTFS) communication system sent by the network device; and
a processing module, configured to form control channel elements (CCEs) based on the resource configuration information,
wherein the processing module is further configured to map a PDCCH candidate to one or more consecutive CCEs.

28. A communication system, comprising:
a network device, configured to implement the method according to any one of claims 1 to 12;
and
a terminal, configured to implement the method according to any one of claims 13 to 25.

29. A communication device, comprising: one or more processors, wherein the communication device is configured to execute the method according to any one of claims 1 to 12 or any one of claims 13 to 25.

30. A storage medium having stored therein instructions, wherein the instructions, when executed on a communication device, cause the communication device to execute the method according to any one of claims 1 to 12 or any one of claims 13 to 25.
